# EUROPEAN PATENT SPECIFICATION

(11) **EP 2 857 706 B1**
(45) Date of publication and mention of the grant of the patent: **21.12.2016**
(21) Application number: 14187268.9
(22) Date of filing: 01.10.2014
(51) Int. Cl.: F16D 13/00, F16D 28/00, F16D 23/12, F16D 27/00, B62K 11/00

(54) **Straddle-type vehicle**
Grätschsitz-Fahrzeug
Véhicule de type à enfourcher

(30) Priority: 01.10.2013 JP 2013206827
(43) Date of publication of application: 08.04.2015
(73) Proprietor: Yamaha Hatsudoki Kabushiki Kaisha, Iwata-shi, Shizuoka 438-8501 (JP)
(72) Inventor: Sekiya, Yu, Iwata-shi, Shizuoka 438-8501 (JP); Minami, Kengo, Iwata-shi, Shizuoka 438-8501 (JP)
(74) Representative: Grünecker Patent- und Rechtsanwälte PartG mbB

(56) References cited:
- EP-A2- 1 650 122
- CA-A1- 2 607 666
- US-A1- 2005 072 648
- US-A1- 2007 144 806
- US-A1- 2007 251 747
- US-B1- 8 543 301

## Description

The present invention relates to a straddle-type vehicle **according to the preamble of independent claim 1**. **Such a straddle-type vehicle can be taken from the prior art document** US 2007/0144806 A1**.**

Some of friction clutches that transmit torque of engines to transmissions include pressure members movable along a shaft. The clutch is placed in an engagement state when a friction member is pressed by the pressure member, and the clutch is placed in a non-engagement state when the pressure on the friction member from the pressure member is released. In related art, there have been motorcycles in which pressure members are operated by clutch actuators. In JP 3645914, a clutch is placed on one side (specifically, right side) in the vehicle width direction (lateral direction) from the transmission, and a cam shaft is placed on the one side in the vehicle width direction from the clutch. That is, the cam shaft is placed at the opposite side to the transmission across the clutch. The cam shaft rotates by power of the clutch actuator and presses the pressure member along the axis direction. The clutch actuator includes a motor and a plurality of gears that decelerate and transmit the rotation of the motor to the cam shaft.

The above structure in which the pressure member is pressed by the member (i.e., the cam shaft in JP 3645914) placed in the one side in the vehicle width direction from the clutch and rotated by the power of the clutch actuator has advantages that simplification of the structure is easier and the cost reduction is easier, compared to the structure in which the pressure member is pressed by a push rod placed inside of a rotation shaft (main shaft) having the clutch and operated by the power of the clutch actuator, for example.

However, in JP 3645914, the transmission of the rotation from the motor of the clutch actuator to the cam shaft is realized substantially only by the gears. Thus, the structure in JP 3645914 has low degree of freedom in the layout of the clutch actuator. Further, in JP 3645914, the gears that transmit the rotation of the motor to the cam shaft are held by the cover covering the gears and the outer surface of the case housing the clutch. Accordingly, the clutch actuator and the case housing the clutch are integrated. Therefore, change of the position of the clutch actuator is not easy and the degree of freedom of the layout of the clutch actuator is low.

Further, in JP 3645914, the clutch actuator is located from the clutch along its radius. That causes a problem that the part in the engine unit in which the clutch is provided is larger. In other words, there is a problem that the part in the engine unit located on the one side in the vehicle width direction from the transmission is larger.

An object of one embodiment of the invention is to provide a straddle-type vehicle that may increase the degree of freedom in the layout of the clutch actuator, enable a compact layout of the engine unit and the clutch actuator, and thereby, suppress upsizing of the vehicle body. According to the present invention said object is solved by a straddle-type vehicle having the features of independent claim 1. Preferred embodiments are laid down in the dependent claims.

A straddle-type vehicle according to the present teaching includes an engine unit having a cylinder part provided in a front part of the engine unit, a transmission provided in a rear part of the engine unit, a clutch provided from the transmission in a first direction which is defined as an outward direction in a vehicle width direction, and a case. The case has a transmission housing part housing the transmission and a clutch housing part housing the clutch. The clutch housing part includes an upper portion located higher than the transmission housing part and housing the clutch. Further, the straddle-type vehicle has a clutch actuator for operating the clutch. The clutch actuator is located above the case in a side view of a vehicle body, provided apart from the upper portion of the clutch housing part in a second direction which is defined as an opposite direction to the first direction, and having at least a part overlapping with the upper portion of the clutch housing part in the side view of the vehicle body. The straddle-type vehicle has a link mechanism. The link mechanism includes a first part provided in the first direction from the clutch and a second part provided above the case and connecting the clutch actuator and the clutch via the parts. The straddle-type vehicle is specifically a motorcycle (including a scooter), a snowmobile, a four-wheel rough terrain vehicle, or the like.

According to the present teaching, the clutch and the clutch actuator are connected via the link mechanism, and thereby, the degree of freedom of the layout of the clutch actuator can be increased. Further, the link mechanism includes the first part provided in the first direction from respect to the clutch and the second part provided above the case having the clutch housing part. The clutch actuator has at least a part thereof overlapping with the upper portion of the clutch housing part in the side view of the vehicle. Accordingly, the engine unit and the clutch actuator are compactly laid out and thus upsizing of the vehicle body can be suppressed.

In one embodiment, the first part may include an operation shaft for operating the clutch, the operation shaft may have a projecting part projecting upward from the clutch housing part, and the second part may connect the projecting part of the operation shaft and the clutch actuator. The operation shaft in the embodiment projects upward from the clutch housing part. On the other hand, the clutch actuator is provided to overlap with the upper portion of the clutch housing part and the position of the clutch actuator is relatively lower. Accordingly, the amount of projection of the operation shaft (the length of the projecting part) can be made smaller. As a result, the engine unit and the clutch actuator can be compactly laid out and upsizing of the vehicle body can be suppressed. Further, bending of the projecting part of the operation shaft can be suppressed when the power of the clutch actuator is applied to the operation shaft, and thus, the power of the clutch actuator can be efficiently transmitted to the clutch.

In an embodiment, the second part may include a connecting member extending in the vehicle width direction, and the connecting member may be located anterior or posterior to an upper end of the clutch housing part in the side view of the vehicle. According to the embodiment, the position of the connecting member may be made lower. As a result, the engine unit, the clutch actuator, and the connecting member can be compactly laid out and upsizing of the vehicle body may be suppressed.

In an embodiment, the projecting part of the operation shaft may be located anterior or posterior to an upper end of the clutch housing part in the side view of the vehicle. According to the embodiment, the position of the second part can be easily made lower. As a result, the second part can be also compactly laid out and upsizing of the vehicle body can be easily suppressed.

In an embodiment, the second part of the link mechanism may include a first arm connected to an output shaft of the clutch actuator, a second arm connected to the projecting part of the operation shaft, and a connecting member extending in the vehicle width direction and having an end in the first direction connected to the second arm and an end in the second direction connected to the first arm. According to the embodiment, the position of the clutch actuator can be adjusted depending on the lengths of the three members of the first arm, the second arm, and the connecting member. As a result, a structure having the higher degree of freedom in the layout of the clutch actuator can be obtained.

In an embodiment, the first arm and the second arm respectively may extend from the connecting member in two directions orthogonal to each other in the side view of the vehicle body. According to the embodiment, the degree of freedom of the layout of the clutch actuator can be further increased.

In an embodiment, the connecting member may be located posterior to the cylinder part, and the second arm may extend forward from the projecting part of the operation shaft in a plan view of the vehicle body and may be connected to the connecting member. According to the embodiment, the second arm extends forward and the connecting member may be made closer to the cylinder part. Accordingly, the clutch actuator can be made closer to the cylinder part. As a result, the engine unit and the clutch actuator can be more compactly laid out and upsizing of the vehicle can be suppressed.

In an embodiment, the clutch actuator may include a motor, and the motor may be arranged so that an axis line of a rotation shaft thereof is directed in a front-back direction in a plan view of the vehicle body. According to the embodiment, the motor can be compactly laid out with respect to the position in the vehicle width direction, and upsizing of the vehicle body in the vehicle width direction can be suppressed.

In an embodiment, the clutch actuator may be located at an opposite side to the clutch housing part across a center in the vehicle width direction. According to the configuration, it is easier for a worker to access the clutch actuator compared to the case where the clutch actuator is provided between the clutch housing part and the center in the vehicle width direction, and the maintenance work of the clutch actuator can be easier.

In an embodiment, the clutch actuator may be located in the first direction from a center in the vehicle width direction. According to the configuration, the member forming the link mechanism can be made shorter and bending of the member can be easily suppressed.

In an embodiment, an intake member may be disposed posterior to a cylinder head provided in an upper part of the cylinder part, at least a part of the clutch actuator may be located in the second direction of the intake member in a plan view, and the link mechanism may be provided below the intake member. According to the embodiment, the distance between the intake member and the clutch actuator can be made smaller in the side view and, as a result, upsizing of the vehicle body in the vertical direction can be suppressed.

In an embodiment, a throttle body may be connected to a cylinder head provided in an upper part of the cylinder part, at least a part of the throttle body may be provided forward with respect to a vertical line passing through a rear end of the cylinder part, and the clutch actuator may be provided posterior to a front end of the throttle body and at least a part of the clutch actuator may be provided rearward from the vertical line. According to the embodiment, rise of the position of the throttle body for avoiding interference with the clutch actuator may be suppressed, and upsizing of the vehicle body in the vertical direction may be suppressed.

In an embodiment, a throttle body may be connected to a cylinder head provided in an upper part of the cylinder part, the throttle body may be shifted in one direction of a forward direction and a rearward direction with respect to a vertical line passing through a rear end of the cylinder part, and the clutch actuator may be shifted in the other direction of the forward direction and the rearward direction with respect to the vertical line. According to the embodiment, rise of the position of the throttle body for avoiding interference with the clutch actuator may be suppressed.

In an embodiment, the operation shaft may incline in a front-back direction from a vertical line passing through the rotation center of the clutch. According to the embodiment, the positions of the clutch actuator and the link mechanism can be lower.

In an embodiment, at least a part of the clutch actuator may be located outward from a side surface of the case in the vehicle width direction. According to the embodiment, a worker can easily access to the clutch actuator for the maintenance.

### BRIEF DESCRIPTION OF THE DRAWINGS

Fig. 1 is a side view of a motorcycle according to one embodiment.
Fig. 2 is a right side view showing an engine unit.
Fig. 3 is a left side view showing the engine unit.
Fig. 4 is a plan view showing the engine unit.
Fig. 5 is a sectional view of a clutch provided in the engine unit.
Figs. 6A and 6B show a clutch actuator and a link mechanism.
Fig. 7 is a left side view showing a modified example of a layout of the clutch actuator.
Fig. 8 is a plan view of the example shown in Fig. 7.
Fig. 9 is a right side view showing another example of the layout of the clutch actuator.
Fig. 10 is a left side view of the example shown in Fig. 9.
Fig. 11 is a plan view of the example shown in Fig. 9.
Fig. 12 is a right side view showing yet another example of the layout of the clutch actuator.
Fig. 13 is a left side view of the example shown in Fig. 12.
Fig. 14 is a plan view of the example shown in Fig. 13.
Fig. 15 shows a modified example of the example shown in Figs. 12 to 14.

### DETAILED DESCRIPTION OF THE EMBODIMENTS

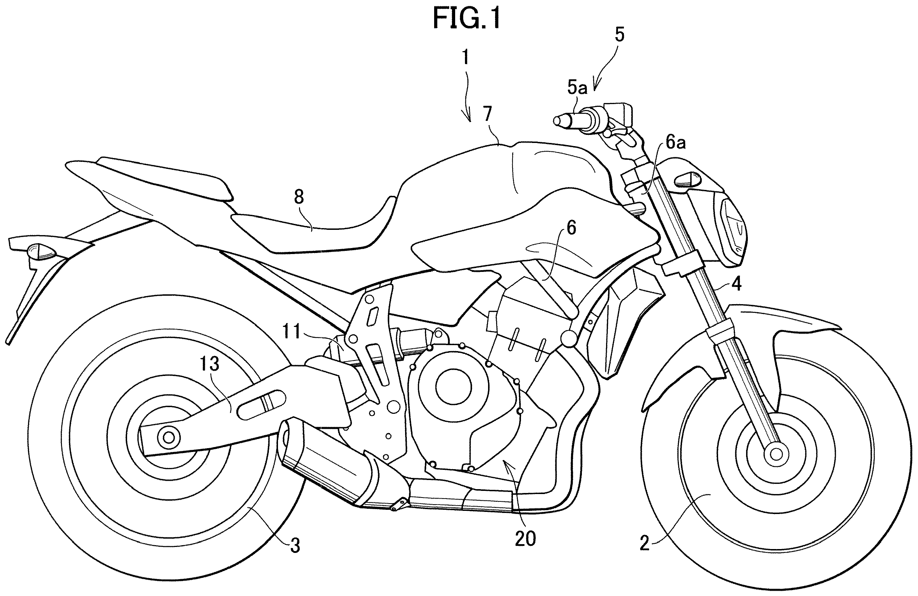

As below, a straddle-type vehicle according to one embodiment will be explained. In the present description, a motorcycle will be explained as an example of the straddle-type vehicle. Fig. 1 is a side view of a motorcycle 1 according to an embodiment.

The motorcycle 1 includes a front wheel 2 and a rear wheel 3. The front wheel 2 is supported at the lower end of a front suspension 4. A steering handle 5 is provided at the upper side of the front suspension 4. Grips 5a are provided in the right part and the left part of the steering handle 5. The right grip 5a is an accelerator grip. The front suspension 4 is turnable to the right and left around a steering shaft (not shown). The steering shaft is rotatably supported by a steering head 6a located in the forefront part of a vehicle body frame 6. In the example shown in Fig. 1, a fuel tank 7 may be located posterior to the steering handle 5, and a seat 8 may be located posterior to the fuel tank 7. The rear wheel 3 may be supported at the rear end of a rear arm 13. The front end of the rear arm 13 may be supported by a pivot shaft (not shown) provided in the vehicle body frame 6, and the rear wheel 3 may be movable upward and downward around the pivot shaft. The motorcycle 1 includes a rear suspension 11 for buffering the vertical movement of the rear wheel 3. The rear end of the rear suspension 11 is attached to the rear arm 13. An engine unit 20 is provided between the front wheel 2 and the rear wheel 3. In an example, the front end of the rear suspension 11 may be attached to the engine unit 20 as shown in Fig. 1.

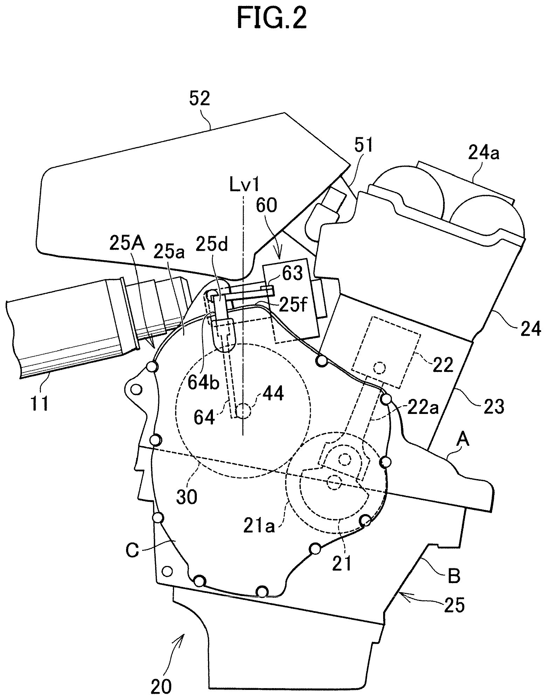

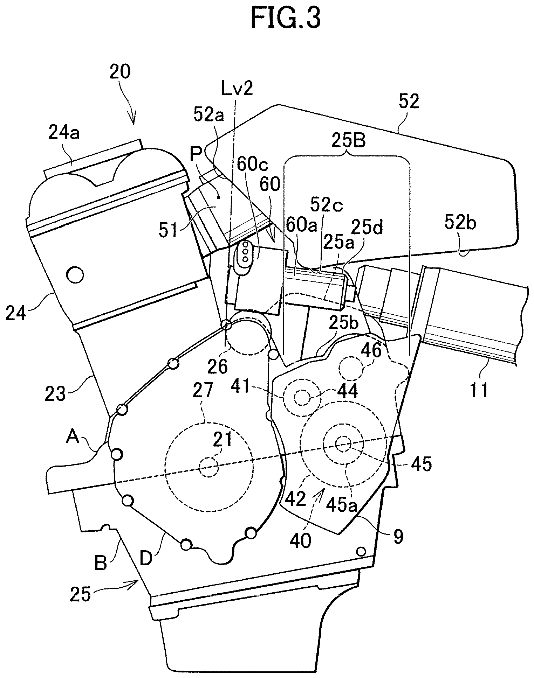

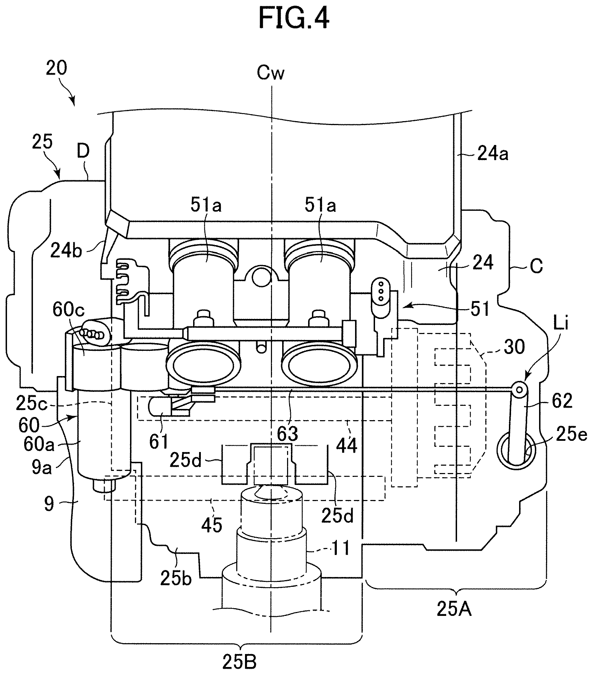

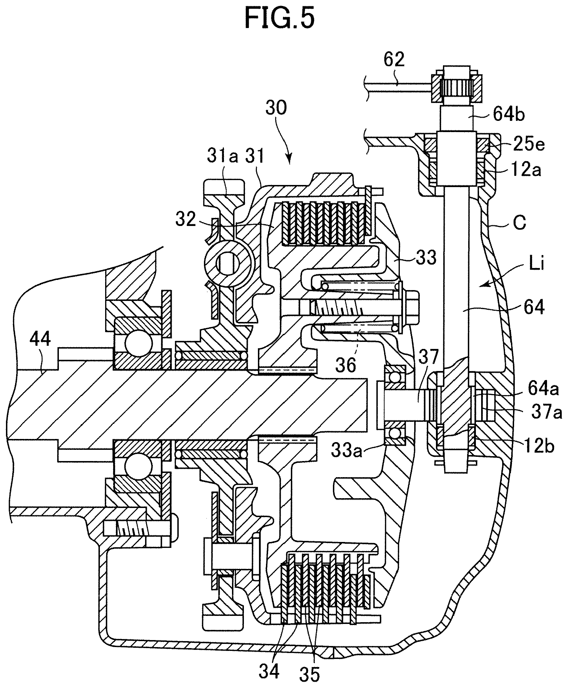

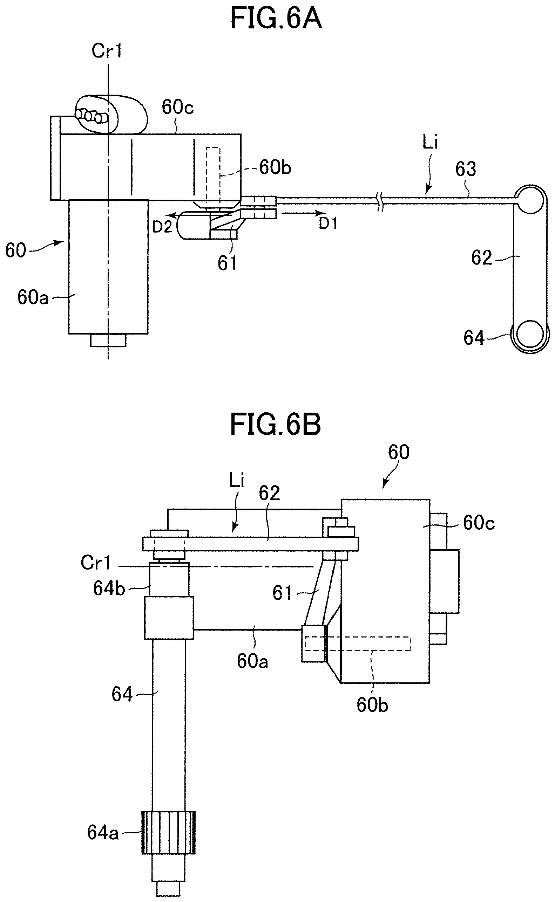

Figs. 2 to 4 show the engine unit 20. Fig. 2 is a right side view, Fig. 3 is a left side view, and Fig. 4 is a plan view. Fig. 5 is a sectional view of a clutch 30 in the engine unit 20. Figs. 6A and 6B show a clutch actuator 60 for operating the clutch 30 and a link mechanism Li. Fig. 6A is a plan view and Fig. 6B is a side view.

As shown in Fig. 2, the engine unit 20 includes, in the front part of the engine unit 20, a cylinder part 23 in which a cylinder is formed. The cylinder has a piston 22 located therein. The cylinder part 23 may be arranged in an attitude such that a cylinder axis line may extend in a vertical direction. An example of the cylinder part 23 may incline forward with respect to the vertical direction as shown in Fig. 2. The attitude of the cylinder part 23 is not limited to that. For example, the cylinder part 23 may be arranged along the vertical direction or along the horizontal direction. A cylinder head 24 is provided on the upside of the cylinder part 23. The cylinder head 24 has an intake port and an exhaust port connected to the combustion chamber of the cylinder. A head cover 24a is provided on the upside of the cylinder head 24.

An intake member for supplying the air to the combustion chamber of the cylinder is connected to the cylinder head 24. The intake member has a throttle body 51 and an air cleaner 52 connected to the throttle body 51. As shown in Fig. 4, the throttle body 51 may have duct parts 51 a forming intake passages and throttle valves disposed in the intake passages for adjustment of the amounts of air. In an example, the cylinder part 23 may have two cylinders. Accordingly, the throttle body 51 may have two duct parts 51 a respectively connected to the two cylinders. An actuator for moving the throttle valve may be provided in the throttle body 51.

As shown in Fig. 2, the throttle body 51 and the air cleaner 52 in an example may be disposed posterior to the cylinder head 24. Specifically, the throttle body 51 obliquely may extend rearward and upward from the cylinder head 24. The air cleaner 52 is connected to the throttle body 51 and may be provided posterior to the cylinder head 24. The layout of the throttle body 51 and the air cleaner 52 is not limited to that. For example, the air cleaner may be provided above the cylinder head 24.

The engine unit 20 includes a crank shaft 21 connected to the piston 22 via a con rod 22a. The crank shaft 21 may be located below the cylinder part 23. An alternator 27 may be attached to an end (specifically, the left end) of the crank shaft 21 (see Fig. 3).

The engine unit 20 includes a transmission 40 (see Fig. 3) and the clutch 30 (see Fig. 2 and 4) in the rear part thereof. The transmission 40 includes, as shown in Fig. 3, a plurality of transmission gears 41 respectively corresponding to a plurality of gearshift positions (e.g., from first to fifth, first to sixth, or the like) (only one transmission gear 41 is shown as an example in Fig. 3). The transmission gear 41 is disposed on a main shaft 44. Further, the transmission 40 includes a drive shaft 45 arranged in parallel to the main shaft 44, and a plurality of transmission gears 42 provided on the drive shaft 45 and respectively corresponding to the plurality of gearshift positions (only one transmission gear 42 is shown as an example in Fig. 3). The transmission gears 41, 42 include movable gears movable along an axis direction of the shaft 44, 45. The movable gears are engaged with the other adjacent transmission gears, and thereby, the respective gearshift positions are made. The transmission 40 has a shift drum 46 (see Fig. 3) and a shift fork (not shown) for moving the movable gears along the axis direction. A sprocket 45a connected to the rear wheel 3 via a chain may be attached to the end of the drive shaft 45. The sprocket 45a may be covered by a cover 9 attached to the side surface of the engine unit 20. The rotation (torque) of the crank shaft 21 is transmitted to the rear wheel 3 via the clutch 30, the transmission 40, and the chain. That is, the rotation of the crank shaft 21 is transmitted to the clutch 30 via a reduction gear 21 a formed on the crank shaft 21 and a reduction gear of the clutch 30 (a reduction gear 31 a provided in a clutch housing 31, which will be described later). When the clutch 30 is in the engagement state (i.e., the drive member and the driven member are frictionally engaged), the rotation of the clutch 30 is transmitted to the main shaft 44. The rotation of the main shaft 44 is transmitted to the drive shaft 45 via the transmission gears 41, 42. The rotation of the drive shaft 45 may be transmitted to the rear wheel 3 via the sprocket 45a and the chain. A pulley connected to the rear wheel 3 via a belt or a gear connected to the rear wheel 3 via a shaft may be provided on the end of the drive shaft 45 in place of the sprocket 45a.

As shown in Fig. 4, the clutch 30 is disposed on the main shaft 44. The clutch 30 is located outward in the vehicle width direction from the transmission 40. In an example explained here, the clutch 30 may be located rightward from the transmission 40 ("rightward" corresponds to "first direction" in claims). The clutch 30 may be located leftward from the transmission 40. The clutch 30 is provided apart from the center Cw of the vehicle body in the vehicle width direction.

The clutch 30 includes a drive member that integrally rotates with the crank shaft 21 and is freely rotatable with respect to the main shaft 44, a driven member that integrally rotates with the main shaft 44, and a friction member that integrally rotates with the drive member or the driven member. Further, the clutch 30 includes a pressure member movable along the axis direction for pressing the friction member against the driven member. When the clutch 30 is in the engagement state (the state in which the friction member is pressed against the driven member), the rotation of the crank shaft 21 is transmitted to the transmission 40. Further, when the clutch 30 is in the non-engagement state (the state in which the friction member is not pressed against the driven member), transmission of the rotation of the crank shaft 21 to the transmission 40 is interrupted.

The clutch 30 of an example explained here may include the clutch housing 31 (drive member) and a clutch boss 32 (driven member) provided inside of the clutch housing 31 as shown in Fig. 5. The reduction gear 31 a may be provided to the clutch housing 31. The reduction gear 31 a integrally rotates with the reduction gear 21 a (see Fig. 2) of the crank shaft 21. In an example, the reduction gear 31 a may mesh with the reduction gear 21 a. The transmission of the rotation from the reduction gear 21 a to the reduction gear 31 a may be realized via an idle gear or chain. The clutch 30 of an example explained here may be a multiple-disc clutch. As shown in Fig. 5, the clutch 30 may have a plurality of friction plates 34 (friction members) integrally rotating with the clutch housing 31, and a plurality of clutch plates 35 integrally rotating with the clutch boss 32. The clutch 30 may be a single-disc clutch having only one friction plate. The clutch 30 includes a pressure member 33. The pressure member 33 is movable along the axis direction and presses the friction plates 34 and the clutch plates 35 toward the clutch boss 32.

The motorcycle 1 includes a clutch actuator 60 (see Fig. 4) for moving the pressure member 33 along the axis direction. Further, the motorcycle 1 includes the link mechanism Li (see Figs. 4 and 5) connecting the clutch actuator 60 and the pressure member 33. As shown in Fig. 5, the link mechanism Li includes an operation shaft 64 provided rightward from the clutch 30 (the operation shaft 64 corresponds to "first part" in claims). A movable member 37 movable together with the pressure member 33 along the axis direction of the main shaft 44 may be attached to the center part of the pressure member 33. The movable member 37 may be supported by the pressure member 33 via a bearing 33a and relatively rotatable with respect to the pressure member 33.

The operation shaft 64 may move the movable member 37 and the pressure member 33 along the axis direction by rotation. In an example explained here, a gear 64a formed in the lower part of the operation shaft 64 may mesh with a rack 37a formed on the movable member 37. Accordingly, when the operation shaft 64 rotates, the pressure member 33 and the movable member 37 move along the axis direction. A cam for pressing the movable member 37 along the axis direction by the rotation of the operation shaft 64 may be formed in the operation shaft 64 in place of the gear 64a. The link mechanism Li includes a connecting rod 63 and arms 61, 62 in addition to the operation shaft 64. They will be described later.

As shown inFig.5, the clutch 30 may include a clutch spring 36 that presses the pressure member 33 toward the clutch boss 32. Therefore, under the condition that the clutch actuator 60 is not activated, the pressure member 33 is subjected to the force of the clutch spring 36 to press the plates 34, 35 against the clutch boss 32, and accordingly, the clutch 30 is in the engagement state. The clutch actuator 60 moves the pressure member 33 in a direction away from the clutch boss 32 against the force of the clutch spring 36, and thereby, the clutch 30 is not engaged.

The clutch 30 may not include the clutch spring 36. In this case, the clutch actuator 60 presses the pressure member 33 toward the clutch boss 32 via the link mechanism Li, and thereby, the clutch 30 is engaged. The clutch actuator 60 releases the pressing force, and thereby, the pressure member 33 separates from the clutch boss 32 and the clutch 30 is not engaged.

The engine unit 20 includes a case 25 housing the crank shaft 21, the transmission 40, and the clutch 30 (see Figs. 2 and 3). The crank shaft 21 and the alternator 27 are provided in the front part of the case 25. The case 25 includes, in the rear part of the case 25, a clutch housing part 25A that houses the clutch 30 and a transmission housing part 25B that houses the transmission 40 (see Fig. 4). The clutch 30 may have the larger diameter than that of the transmission gear 41 provided on the main shaft 44. Accordingly, the clutch housing part 25A has a part located higher than the transmission housing part 25B in the side view (hereinafter, this part will be referred to as "upper portion 25a") as shown in Fig. 3.

In this specification, the upper portion 25a is a portion projecting above an upper surface 25b of the transmission housing part 25B in the side view. The upper portion 25a may be just a small part thereof located higher than the transmission housing part 25B. In an example in which the rear part of the upper surface 25b of the transmission housing part 25B (e.g., the part covering the shift drum 46) protrudes to the nearly equal height to that of the clutch housing part 25A, the portion projecting from the front part of the upper surface 25b may be the upper portion 25a of the clutch housing part 25A.

The case 25 may include an upper case A and a lower case B combined with each other in the vertical direction, for example (see Fig. 2). Further, the case 25 may include a clutch cover C (see Figs. 2 and 4) attached to the right side of the rear parts of the cases A, B and covering the clutch 30, and an alternator cover D (see Figs. 3 and 4) attached to the left side of the cases A, B and covering the alternator 27. Alternatively, the clutch housing part 25A may include the right parts of the cases A, B and the clutch cover C. The transmission housing part 25B may be provided in the rear parts of the cases A, B. The upper case A may be integrally formed with the cylinder part 23.

The clutch actuator 60 is disposed above the case 25 in the side view of the vehicle body (see Fig. 3). Further, the clutch actuator 60 is disposed leftward ("leftward" corresponds to "second direction" in claims) apart from the upper portion 25a of the clutch housing part 25A as shown in Fig. 4. When the clutch 30 is located on the left side of the engine unit, the clutch actuator 60 is disposed rightward apart from the upper portion 25a. The clutch actuator 60 is disposed such that a part thereof may overlap with the upper portion 25a of the clutch housing part 25A in the side view of the vehicle body. In an example, the clutch actuator 60 may be disposed such that the rear part thereof (specifically, an electric motor 60a, which will be described later) may overlap with the upper portion 25a of the clutch housing part 25A (see Fig. 3). Alternatively, the clutch actuator 60 may be disposed such that the entire thereof may overlap with the upper portion 25a of the clutch housing part 25A in the side view.

According to the above described layout of the clutch actuator 60, the position of the clutch actuator 60 can be made lower and thus the engine unit 20 and the clutch actuator 60 can be compactly laid out. As a result, interference between the other components and devices provided above the case 25 and the clutch actuator 60 can be easily avoided while upsizing of the vehicle body is suppressed. In an example, the intake member including the throttle body 51 and the air cleaner 52 may be located above the rear part of the case 25. As shown in Fig. 3, the clutch actuator 60 may be arranged among the intake members and the case 25 in the side view. According to the above described layout of the clutch actuator 60, interference between the clutch actuator 60 and the intake members can be easily avoided while upsizing of the vehicle is suppressed.

In an example, the throttle body 51 may be connected to a front surface 52a of the air cleaner 52. The front surface 52a of the air cleaner 52 obliquely may extend rearward and downward from the connecting part to the throttle body 51. As shown in Fig. 3, in the side view of the vehicle body, the clutch actuator 60 may be arranged in a space surrounded by the rear surface of the cylinder part 23, the throttle body 51, the front surface 52a of the air cleaner 52, a lower surface 52b of the air cleaner 52, and the upper surface of the case 25. As will be described later, the clutch actuator 60 of an example explained here may include a gear case 60c in the front part thereof and include the electric motor 60a in the rear part. In the side view of the vehicle body, the longitudinal width of the gear case 60c may be larger than the longitudinal width (diameter) of the electric motor 60a. Further, the gear case 60c may be disposed in a space below the throttle body 51, which is formed by arranging the throttle body 51 to obliquely extend rearward and upward from the cylinder head 24. Furthermore, in an example, the gear case 60c may be located anterior to a lower end 52c of the air cleaner 52 in the side view of the vehicle body. The link mechanism Li includes a connecting rod 63 and the arms 61, 62 as will be described later, and these members are located above the case 25 and below the intake member (more specifically, the throttle body 51).

At least a part of the throttle body 51 may be located anterior to a vertical line Lv2 passing through the rear end of the cylinder part 23. As shown in Fig. 3, the throttle body 51 may be sifted forward with respect to the vertical line Lv2. That is, the center P of the duct part 51 a in the front-back direction may be located anterior to the vertical line Lv2. On the other hand, the clutch actuator 60 may be located posterior to the front end of the throttle body 51 and at least a part thereof may be located posterior to the vertical line Lv2. As shown in Fig. 3, the clutch actuator 60 may be sifted rearward with respect to the vertical line Lv2. That is, the center of the clutch actuator 60 in the front-back direction may be located posterior to the vertical line Lv2. According to the layout of the clutch actuator 60 and the throttle body 51, rise of the position of the throttle body 51 for avoiding interference with the clutch actuator 60 can be suppressed, and upsizing of the vehicle body in the vertical direction can be suppressed. Note that the clutch actuator 60 and the throttle body 51 may overlap with the vertical line Lv2, or the whole clutch actuator 60 may be located posterior to the vertical line Lv2 and the whole throttle body 51 may be located anterior to the vertical line Lv2.

The clutch actuator 60 may be sifted leftward from the intake member (specifically, the throttle body 51) in the plan view of the vehicle body (see Fig. 4). That is, a part of the clutch actuator 60 may be located on the left of the throttle body 51. The link mechanism Li may be located below the throttle body 51. According to the configuration, in the side view of the vehicle body, the distance between the throttle body 51 and the clutch actuator 60 can be made smaller, and upsizing of the vehicle body in the vertical direction can be suppressed.

As shown in Fig. 3, the straight line connecting the rotation center of the crank shaft 21 and the rotation center of the drive shaft 45 may be located lower than the main shaft 44. Accordingly, the distance between the rotation center of the crank shaft 21 and the rotation center of the drive shaft 45 can be reduced and the width of the engine unit 20 in the front-back direction can be reduced. Further, since the straight line connecting the rotation center of the crank shaft 21 and the rotation center of the drive shaft 45 is located below the main shaft 44, a relatively large space can be formed leftward from the clutch housing part 25A. As a result, it is easier to place the clutch actuator 60 and compactly lay out the engine unit 20 and the clutch actuator 60.

The clutch actuator 60 in the example explained here may be located at the opposite side to the clutch housing part 25A across the center Cw in the vehicle width direction in the plan view of the vehicle body. According to the layout, it is easy for a worker to access the clutch actuator 60 and conduct maintenance work for the clutch actuator 60. As shown in Fig. 4, the clutch housing part 25A may be located rightward from the center Cw in the vehicle width direction, and the clutch actuator 60 may be located leftward from the center Cw in the vehicle width direction.

At least a part of the clutch actuator 60 may be located above the case 25. In the example explained here, the part of the clutch actuator 60 may be located above a part located leftward from the clutch housing part 25A (that is, above a part housing the transmission housing part 25B and the alternator 27).

The rest of the clutch actuator 60 may be located at the outer side of a side surface 25c of the rear part of the case 25 (in other words, the side surface of the transmission housing part 25B, the left side surface in Fig. 4) in the vehicle width direction. According to the layout, it is easier for the worker to access the clutch actuator 60 and conduct maintenance work for the clutch actuator 60. As shown in Fig. 4, the rest of the clutch actuator 60 may be located above the cover 9. Further, the clutch actuator 60 may be located closer to the center in the vehicle width direction than an outer surface 9a of the cover 9 in the plan view. The layout of the clutch actuator 60 is not limited to that. For example, the whole clutch actuator 60 may be located closer to the center Cw in the vehicle width direction than the side surface 25c of the rear part of the case 25. That is, the whole clutch actuator 60 may be located above the transmission housing part 25B.

The clutch actuator 60 may be held by an attachment part attached to the case 25 or integrally formed with the case 25, for example. Further, the clutch actuator 60 may be supported by an attachment part attached to the cylinder part 23 or the vehicle body frame 6.

In the example explained here, a part of the clutch actuator 60 may be located at the outer side in the vehicle width direction of the side surface of the cylinder part 23 and a side surface 24b (the left side surface in the example explained here) of the cylinder head 24 in the plan view (see Fig. 4). According to the layout, the air hitting against the clutch actuator 60 increases at traveling of the vehicle, and the clutch actuator 60 is easily cooled.

The case 25 may have a suspension support part 25d that projects upward from the rear part thereof (specifically, the transmission housing part 25B) and supports the front end of the rear suspension 11 as shown in Figs. 2 and 4. The rear suspension 11 may be located at the center Cw in the vehicle width direction. The clutch actuator 60 may be located at the opposite side to the clutch housing part 25A across the suspension support part 25d.

The clutch actuator 60 includes an output shaft 60b as shown in Figs. 6A and 6B. The output shaft 60b is connected to the pressure member 33 of the clutch 30 via the link mechanism Li. The link mechanism Li includes a connecting member provided at the upside of the case 25 and extending in the vehicle width direction. The connecting member may be a rod, for example, as shown in Figs. 6A and 6B (as below, the rod will be referred to as "connecting rod 63"). The connecting member may be a wire. The link mechanism Li is used, and thereby, the degree of freedom of the layout of the clutch actuator 60 can be increased. For example, by adjustment of the length of the connecting member, the position of the clutch actuator 60 in the vehicle width direction can be set in a desirable position.

As described above, in an example, the operation shaft 64 of the link mechanism Li is located rightward (that is, in the first direction) from the clutch 30. In an example, the clutch actuator 60 is located leftward (that is, in the second direction) apart from the clutch housing part 25A housing the clutch 30. Therefore, the connecting member connecting them crosses over the clutch 30 in the vehicle width direction. The connecting member is a rod or wire as described above, and the section of the connecting member is smaller than the section of the clutch actuator 60 ("section" here is a section obtained by a cutting plane orthogonal to the vehicle width direction). As described above, the clutch actuator 60 and the operation shaft 64 provided at the opposite sides to each other across the position of the clutch 30 may be connected through the connecting member having the smaller section, and thereby, the clutch actuator 60, the link mechanism Li, and the engine unit 20 (more specifically, the clutch housing part 25A) can be compactly laid out.

The link mechanism Li may include the arms 61, 62 respectively attached to ends of the connecting rod 63 (the connecting rod. The arms 61, 62 correspond to "second part" in claims) as shown in Figs. 6A and 6B. The first arm 61 is connected to the left end of the connecting rod 63 and the second arm 62 is connected to the right end of the connecting rod 63. The arms 61, 62 extend in directions intersecting with the extension direction of the connecting rod 63 (vehicle width direction) in the side view of the vehicle body. Thereby, the degree of freedom of the layout of the clutch actuator 60 can be further increased. For example, by adjustment of the lengths of the arms 61, 62, the position of the clutch actuator 60 in the vertical direction and/or the front-back direction can be set in a desirable position.

Specifically, the link mechanism Li may include the first arm 61 extending from the output shaft 60b of the clutch actuator 60 in the radius direction thereof. The first arm 61 rotates with the output shaft 60b. The first arm 61 is connected relatively rotatable to one end of the connecting rod 63. Further, the link mechanism Li may include the second arm 62 extending from the above described operation shaft 64 in the radius direction thereof. The second arm 62 rotates with the operation shaft 64. The second arm 62 is connected relatively rotatable to the other end of the connecting rod 63.

In the example explained here, the output shaft 60b and the operation shaft 64 may be provided such that hypothetical lines passing thorough their axis lines may be orthogonal to each other in the side view of the vehicle body. Accordingly, the first arm 61 and the second arm 62 respectively may extend in two directions orthogonal to each other in the side view of the vehicle body. Specifically, one arm of the first arm 61 and the second arm 62 may extend in the front-back direction in the plan view of the vehicle body and the other arm may extend in a direction orthogonal to the one arm (specifically, in the vertical direction). Accordingly, by adjustment of the respective lengths of the arms 61, 62, the position of the clutch actuator 60 in the front-back direction and the vertical direction can be set in a desirable position.

As shown in Figs. 6A and 6B, the axis line of the output shaft 60b of the clutch actuator 60 may be along the front-back direction, and the first arm 61 may extend in the vertical direction. By adjustment of the length of the first arm 61, the position of the clutch actuator 60 in the vertical direction can be set in a desirable position. On the other hand, the operation shaft 64 may extend substantially in the vertical direction, and the second arm 62 may extend in the front-back direction. By adjustment of the length of the second arm 62, the position of the clutch actuator 60 in the front-back direction can be set in a desirable position.

The layout of the two arms 61, 62 is not limited to the example shown in Figs. 6A and 6B. For example, the first arm 61 may be provided to extend in the front-back direction and the second arm 62 may be provided to extend in the vertical direction. Further, the axis of the output shaft 60b and the axis of the operation shaft 64 may be in parallel to each other. In that case, the first arm 61 and the second arm 62 may be provided in parallel. In other words, the plane in which the first arm 61 rotates and the plane in which the second arm 62 rotates may be in parallel.

The operation shaft 64 passes through an opening 25e formed in the clutch housing part 25A and projects upward from the clutch housing part 25A as shown in Figs. 2 and 5 (as below, the part projecting from the clutch housing part 25A will be referred to as "projecting part 64b"). The upper end of the projecting part 64b may be located above the clutch housing part 25A in the side view. The projecting part 64b may be connected to the output shaft 60b of the clutch actuator 60 via the second arm, the connecting rod 63, and the first arm 61. The opening 25e may be formed on the upper surface of the clutch housing part 25A or on the side surface of the clutch housing part 25A.

As described above, the part of the clutch actuator 60 is provided to overlap with the upper portion 25a of the clutch housing part 25A in the side view. According to the structure, compared to a structure in which the whole clutch actuator is located higher than the upper portion 25a, the position of the clutch actuator 60 is lower. Accordingly, the amount of upward projection of the operation shaft 64, i.e., the length of the projecting part 64b can be reduced. As a result, bending of the projecting part 64b can be suppressed when the operation shaft 64 is subjected to a force from the second arm 62, and thereby, the force of the clutch actuator 60 can be efficiently transmitted to the pressure member 33. Note that, as shown in Fig. 5, a bearing 12a that supports the operation shaft 64 may be provided inside of the opening 25e. Further, the lower end of the operation shaft 64 may be also supported by a bearing 12b. Accordingly, when the operation shaft 64 is subjected to the force from the second arm 62, bending of a part between the two bearings 12a, 12b is suppressed by the two bearings 12a, 12b.

The second arm 62 may extend forward from the projecting part 64b of the operation shaft 64. The connecting rod 63 may be connected to the front end of the second arm 62. According to the structure, the position of the connecting rod 63 can be made closer to the rear surface of the cylinder part 23. As a result, a space for providing other components or devices can be easily secured posterior to the cylinder part 23. Further, the position of the clutch actuator 60 in the front-back direction can be made closer to the cylinder part 23 and thereby the clutch actuator 60 and the engine unit 20 can be compactly laid out. The placement of the second arm 62 is not limited to that, however, the second arm 62 may extend rearward from the projecting part 64b, for example.

In the example explained here, as shown in Fig. 2, the position of the projecting part 64b of the operation shaft 64 may be shifted in the front-back direction from an upper end 25f of the clutch housing part 25A in the side view. According to the placement of the operation shaft 64, the position of the projecting part 64b can be made lower compared to the structure in which the projecting part 64b projects from the upper end 25f of the clutch housing part 25A. As a result, the position of the second arm 62 can be made lower and the space necessary for the placement of them can be made smaller. That is, the second arm 62 can be compactly laid out. In the example shown in Fig. 2, the projecting part 64b may be located rearward from the upper end 25f of the clutch housing part 25A in the side view. The positions of the second arm 62 and the projecting part 64b are not limited to the above described example. For example, the projecting part 64b may be located posterior to the upper end 25f of the clutch housing part 25A, and the second arm 62 may further extend rearward from the projecting part 64b.

The operation shaft 64 may incline in the front-back direction from a vertical line Lv1 passing through the rotation center (main shaft 44) of the clutch 30. Thereby, the position of the projecting part 64b is shifted in the front-back direction from the upper end 25f of the clutch housing part 25A. In the example shown in Fig. 2, the operation shaft 64 inclines rearward from the vertical line Lv1. As a result, the projecting part 64b is located rearward from the upper end 25f of the clutch housing part 25A.

The link mechanism Li may operate in the following manner. When the first arm 61 is subjected to the rotation of the output shaft 60b of the clutch actuator 60 and rotates to the right (in the D1 direction in Fig. 6A), the second arm 62 rotates to the right around the axis of the operation shaft 64 and the operation shaft 64 also rotates. As a result, the movable member 37 and the pressure member 33 engaged with the gear 64a of the operation shaft 64 move to the right (in a direction away from the clutch boss 32). In contrast, when the first arm 61 rotates to the left (in a direction D2 in Fig. 6A), the second arm 62 rotates to the left around the axis of the operation shaft 64 and the operation shaft 64 also rotates. As a result, the movable member 37 and the pressure member 33 engaged with the gear 64a of the operation shaft 64 move to the left (in a direction closer to the clutch boss 32).

The clutch actuator 60 includes the electric motor 60a as shown in Figs. 6A and 6B. Further, the clutch actuator 60 may include one or more reduction gears that decelerate and transmit the rotation of the rotation shaft of the electric motor 60a to the output shaft 60b. The clutch actuator 60 may include the gear case 60c that houses the reduction gear and rotatably supports the reduction gear. The electric motor 60a and the gear case 60c are fixed to each other. Accordingly, the actuator 60 can be handled as one unit at manufacturing of the motorcycle 1, and the manufacturing work can be made easier. Furthermore, the clutch actuator 60 is a separated body from the engine unit 20, and the position of the clutch actuator 60 can be changed relatively easily. The clutch actuator 60 may include a rotation sensor for sensing an amount of operation of the clutch actuator 60 (e.g., the rotation angle of the rotation shaft of the electric motor 60a).

The clutch actuator 60 may be arranged such that an axis line Cr1 of the rotation shaft of the electric motor 60a is directed in the front-back direction in the plan view of the vehicle body as shown in Figs. 4 and 6A and 6B. The electric motor 60a may a cylindrical shape elongated in the direction along the axis line Cr1. According to the layout of the clutch actuator 60, the motor 60a can be compactly placed with respect to the position in the vehicle width direction, and upsizing of the vehicle body in the vehicle width direction can be suppressed.

The clutch actuator 60 of the example shown here may have the gear case 60c in the front part thereof and the electric motor 60a in the rear part. The gear case 60c and the electric motor 60a may be arranged to have a nearly L-shape. That is, the gear case 60c may be provided to extend from the end of the electric motor 60a in the radius direction of the rotation shaft. As shown in Fig 4, the clutch actuator 60 may be arranged such that the gear case 60c extends from the electric motor 60a toward the center in the vehicle width direction. According to the layout of the clutch actuator 60, a distance from the devices and components located above the clutch actuator 60 (the throttle body 51 and the air cleaner 52 in as embodiment) to the clutch actuator 60 can be smaller. Or, a distance from devices and components located below the clutch actuator 60 (specifically, a starter motor 26 to be explained later) to the clutch actuator 60 can be smaller. Thereby, they can be compactly laid out. As a result, upsizing of the vehicle body can be suppressed.

The electric motor 60a may attached to the leftmost part (the part at the outer side in the vehicle width direction) of the gear case 60c and the output shaft 60b may be provided in the rightmost part (the part at the center side in the vehicle width direction) of the gear case 60c. As described above, the throttle body 51 includes a plurality (two in the example explained here) of the duct parts 51 a. The clutch actuator 60 may be located outward in the vehicle width direction (specifically, leftward) from the plurality of the duct parts 51 a in the plan view as shown in Fig. 4. More specifically, the electric motor 60a of the clutch actuator 60 may be located leftward from the left duct part 51 a. The layout of the clutch actuator 60 is not limited to that. For example, the gear case 60c may be provided to extend upward from the electric motor 60a. Further, the gear case 60c may be provided to extend downward from the electric motor 60a.

As shown in Fig. 6B, the output shaft 60b and the electric motor 60a may project in the same direction from the gear case 60c. Accordingly, the electric motor 60a and the first arm 61 may be located at the same side of the gear case 60c (at the rear side in the example explained here). Thereby, the width in the front-back direction of the space necessary for placement of the clutch actuator 60 and the link mechanism Li can be reduced.

As shown in Figs. 6A and 6B, the electric motor 60a may be arranged such that the axis line Cr1 of the rotation shaft thereof and the operation shaft 64 of the link mechanism Li are orthogonal in the side view. Further, the axis line of the output shaft 60b of the clutch actuator 60 may be orthogonal to the operation shaft 64 of the link mechanism Li in the side view as described above. The placement of the electric motor 60a and the output shaft 60b is not limited to that. For example, the electric motor 60a may be arranged such that the axis line Cr1 of the rotation shaft thereof and the operation shaft 64 of the link mechanism Li are in parallel in the side view. Furthermore, the output shaft 60b may be arranged such that the axis line thereof is orthogonal to the operation shaft 64 of the link mechanism Li in the side view.

As shown in Fig. 3, the engine unit 20 may have the starter motor 26 for starting the engine. The starter motor 26 may be attached to the upper part of the case 25. Further, the starter motor 26 may be located posterior to the cylinder part 23 and anterior to the transmission housing part 25B. The clutch actuator 60 may be located above the starter motor 26. In the example explained here, the gear case 60c may be located above the starter motor 26. As described above, the throttle body 51 extends rearward and upward from the cylinder head 24. The gear case 60c may be located in a space formed between the throttle body 51 and the starter motor 26 in the side view.

The electric motor 60a may be arranged such that the axis line Cr1 of the rotation shaft is inclined in the side view of the vehicle body. Specifically, the axis line Cr1 may be inclined such that the position of the front part of the clutch actuator 60 (the gear case 60c) is higher than the position of the rear part of the clutch actuator 60 (the rear part of the electric motor 60a). The starter motor 26 may be located below the front part of the clutch actuator 60. The lowermost part of the air cleaner 52 may be located above the rear part of the clutch actuator 60. That is, the electric motor 60a is inclined, and thereby, the clutch actuator 60, the starter motor 26, and the air cleaner 52 can be compactly laid out, and upsizing of the vehicle body can be suppressed. Alternatively, the axis line Cr1 may be inclined such that the position of the rear part of the clutch actuator 60 is higher than the position of the front part of the clutch actuator 60. The starter motor 26 may be located below the rear part of the clutch actuator 60. The component located below the clutch actuator 60 is not limited to the starter motor 26.

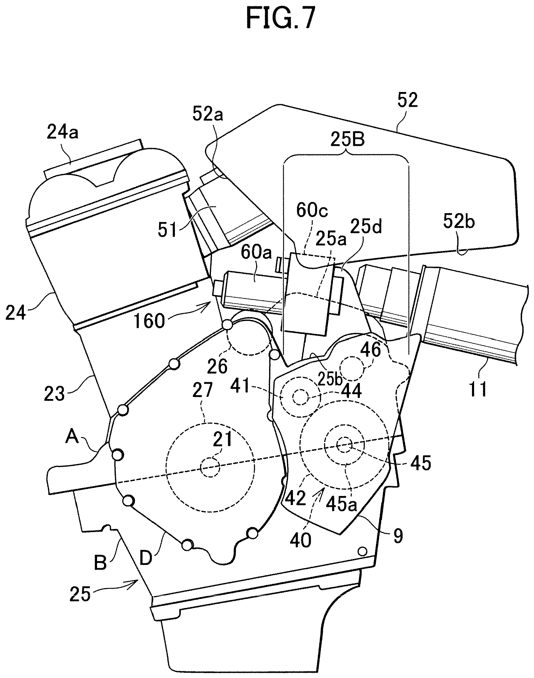

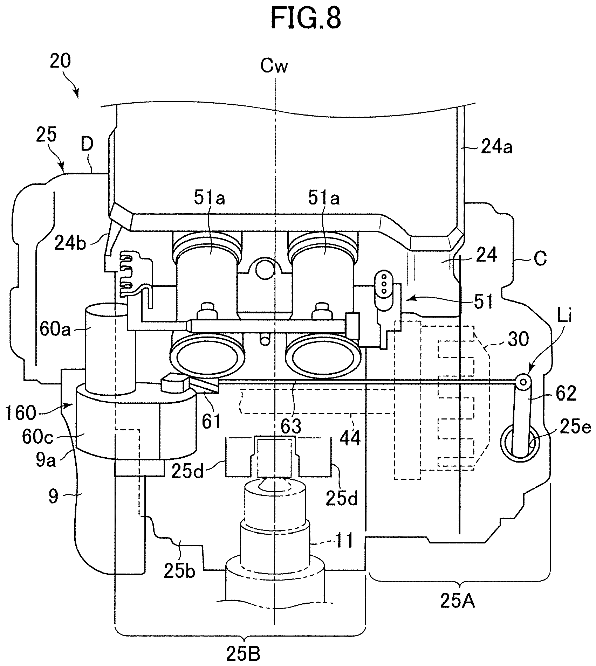

Figs. 7 and 8 show a modified example of the layout of the clutch actuator. Fig. 7 is a left side view and Fig. 8 is a plan view. In the drawings, the same parts as the parts explained with reference to Figs. 2 to 6B have the same signs. As below, the differences from the examples explained with reference to Figs. 2 to 6B are explained mainly. The items without explanation are the same as the examples explained with reference to Figs. 2 to 6B.

In Figs. 7 and 8, a clutch actuator 160 is shown in place of the above described clutch actuator 60. The clutch actuator 160 includes the electric motor 60a, the gear case 60c, and the output shaft 60b like the clutch actuator 60. The clutch actuator 160 is arranged such that a part thereof overlaps with the upper portion 25a of the clutch housing part 25A in the side view. The clutch actuator 160 includes the electric motor 60a in the front part and the gear case 60c in the rear part (see Fig. 7). In the side view of the vehicle body, the gear case 60c overlaps with the upper portion 25a of the clutch housing part 25A.

The electric motor 60a of the clutch actuator 160 is located anterior to the gear case 60c of the clutch actuator 160, and thereby, the air hitting against the electric motor 60a increases when traveling of the vehicle and the cooling performance of the electric motor 60a can be increased. Particularly, in the example explained here, a part of the electric motor 60a may be located further outward in the vehicle width direction than the side surface of the cylinder part 23 and the side surface 24b of the cylinder head 24 as shown in Fig. 8. According to the layout, the air hitting against the electric motor 60a further increases.

As shown in Fig. 8, the electric motor 60a may be located outward in the vehicle width direction from the duct part 51 a of the throttle body 51 in the plan view. Further, as shown in Fig. 7, the electric motor 60a may be located below the throttle body 51 in the side view. The diameter of the electric motor 60a is smaller than the widths of the gear case 60c in the vehicle width direction and the vertical direction. Therefore, according to the layout in which the electric motor 60a is located anterior to the gear case 60c, the clutch actuator 160 and the throttle body 51 may be compactly laid out.

As described above, the output shaft 60b is provided in the gear case 60c. The first arm 61 attached to the output shaft 60b may extend downward from the output shaft 60b (see Fig. 8). According to the layout, rise of the position of the connecting rod 63 attached to the end of the first arm 61 can be suppressed. The layout of the clutch actuator 160 is not limited to that. The first arm 61 may extend upward from the output shaft 60b like the examples shown in Fig. 2 to 6B.

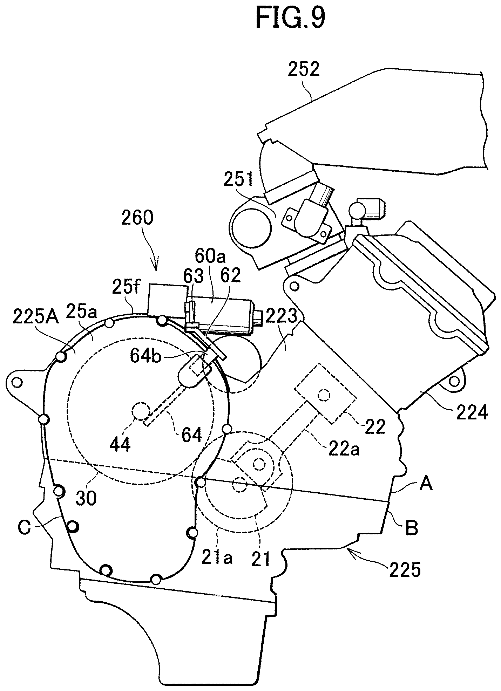

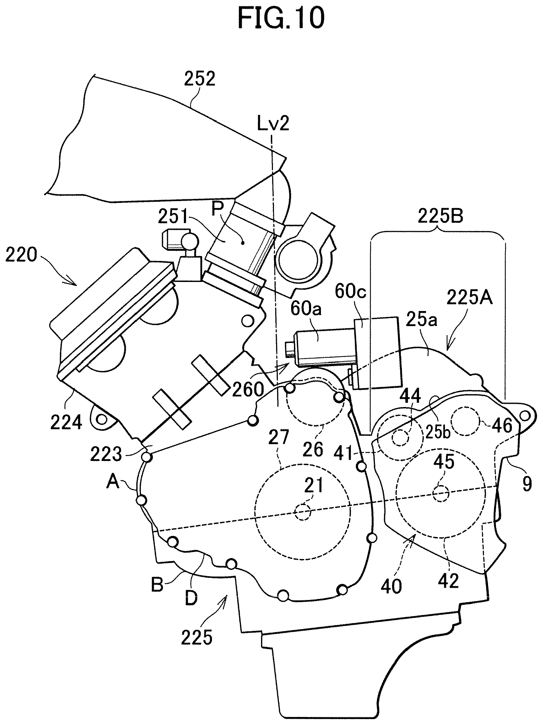

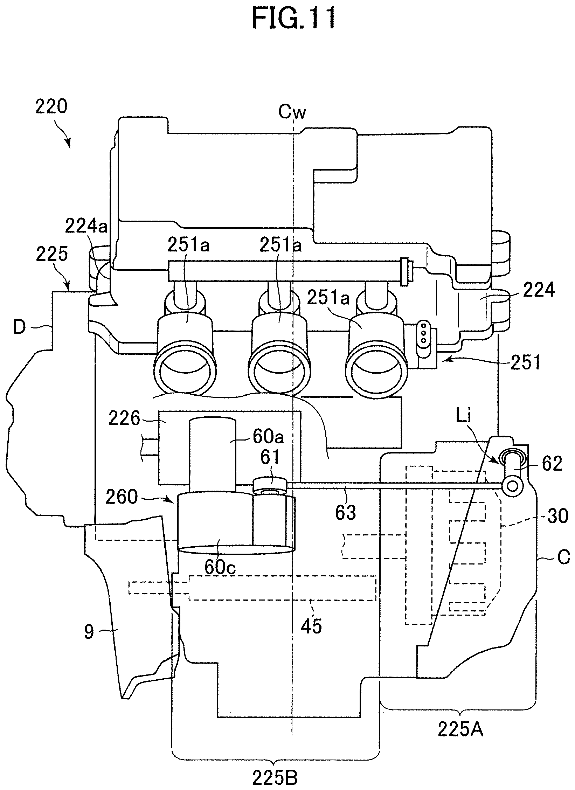

Figs. 9 to 11 show another example of the layout of the engine unit and the clutch actuator. Fig. 9 is a right side view, Fig. 10 is a left side view, and Fig. 11 is a plan view. Here, the differences from the example explained with reference to Figs. 2 to 6B are centered for explanation. The items without explanation are the same as the example explained with reference to Figs. 2 to 6B.

In Figs. 9 to 11, a clutch actuator 260, an engine unit 220, a throttle body 251, and an air cleaner 252 respectively corresponding to the above described clutch actuator 60, engine unit 20, throttle body 51, and air cleaner 52 are shown. The engine unit 220 has a cylinder part 223, a cylinder head 224, and a case 225 respectively corresponding to the above described cylinder part 23, cylinder head 24, and case 25. In the example explained here, unlike the examples explained with reference to Figs. 2 to 6B, the air cleaner 252 is located above the cylinder head 224. The cylinder part 223 in the example explained here has three cylinders. Accordingly, the throttle body 251 has three duct parts 251 a in which three intake passages are respectively formed as shown in Fig. 11. The number of the cylinders and the number of duct parts 251 a are not limited to three. More cylinders and more duct parts 251 a may be provided to the engine. Less cylinders and less duct parts 251 a may be provided to the engine.

The case 225 includes a clutch housing part 225A like the above described case 25. The clutch actuator 260 is arranged such that a part thereof overlaps with the upper portion 25a of the clutch housing part 225A in the side view of the vehicle body (see Fig. 10). In the example explained here, the gear case 60c of the clutch actuator 260 may overlap with the upper portion 25a of the clutch housing part 225A in the side view. Thereby, the clutch actuator 260 and the engine unit 220 may be compactly laid out, and upsizing of the vehicle body may be suppressed.

The clutch actuator 260 may be located above the case 225. Specifically, as shown in Figs. 10 and 11, the rear part of the clutch actuator 260 (the gear case 60c in the example explained here) may be located above a transmission housing part 225B, and located closer to the center Cw in the vehicle width direction than the side surface of the transmission housing part 225B. The front part of the clutch actuator 260 (the electric motor 60a in the example explained here) may be located above a part housing the crank shaft 21 and the alternator 27 in the case 225.

As described above, the air cleaner 252 is located above the cylinder head 224. Accordingly, the throttle body 251 (more specifically, the duct part 251a) is further inclined upward than the above described throttle body 51. As shown in Fig. 10, a part of the throttle body 251 may be located anterior to the vertical line Lv2 passing through the rear end of the cylinder part 223. Specifically, the throttle body 251 may be shifted forward with respect to the vertical line Lv2 passing through the rear end of the cylinder part 223. That is, the center P of the duct part 251 a in the front-back direction may be located anterior to the vertical line Lv2. On the other hand, the clutch actuator 260 may be shifted rearward with respect to the vertical line Lv2. That is, the center of the clutch actuator 260 in the front-back direction may be located posterior to the vertical line Lv2. In the example shown in Fig. 10, the whole clutch actuator 260 may be located posterior to the vertical line Lv2. According to the layout of the clutch actuator 260 and the throttle body 251, rise of the position of the throttle body 251 for avoiding interference with the clutch actuator 260 can be suppressed, and upsizing of the vehicle in the vertical direction can be suppressed. In the example explained here, as shown in Fig. 10, the front end of the clutch actuator 260 may be located posterior to the vertical line Lv2. The front part of the clutch actuator 260 may overlap with the vertical line Lv2. Alternatively, the throttle body 251 may be shifted rearward with respect to the vertical line Lv2 and the clutch actuator 260 may be shifted frontward with respect to the vertical line Lv2.

As shown in Fig. 9, in the example explained here, the operation shaft 64 of the link mechanism Li may be inclined forward from the vertical line passing through the rotation center (main shaft 44) of the clutch 30 in the side view. Further, the projecting part 64b of the operation shaft 64 may be located anterior to the upper end 25f of the clutch housing part 225A. Thereby, the position of the projecting part 64b can be made lower, and the distance between the clutch housing part 225A and the components and devices provided above is easily reduced. Particularly, in the example shown in Fig. 9, the position of the upper end of the projecting part 64b may be lower than that of the upper end 25f of the clutch housing part 225A.

The second arm 62 attached to the projecting part 64b of the operation shaft 64 may extend rearward from the projecting part 64b in the plan view of the vehicle body. More specifically, the second arm 62 obliquely may extend rearward and upward. Further, in the example shown in Fig. 9, the position of the whole second arm 62 may be lower than that of the upper end 25f of the clutch housing part 225A. Accordingly, the distance between the clutch housing part 225A and the components and devices provided above can be more easily reduced. Further, the connecting rod 63 connected to the end of the second arm 62 may be located anterior to the upper end 25f of the clutch housing part 225A in the side view of the vehicle body. Thereby, the engine unit 220, the clutch actuator 260, and the connecting rod 63 can be compactly laid out and upsizing of the vehicle body may be suppressed. Note that the projecting part 64b of the operation shaft 64 may be located posterior to the upper end 25f of the clutch housing part 225A and the second arm 62 and the connecting rod 63 may be located posterior to the upper end 25f of the clutch housing part 225A. Also, in this case, the engine unit 220, the clutch actuator 260, and the connecting rod 63 can be compactly laid out and upsizing of the vehicle body can be suppressed.

As shown in Fig. 10, the electric motor 60a in the clutch actuator 260 is located anterior to the gear case 60c. The electric motor 60a may be arranged such that the direction of the axis line thereof is along the front-back direction in the plan view. The starter motor 26 may be located below the electric motor 60a (see Fig. 11). The gear case 60c may be located posterior to the starter motor 26. In other words, the position of the lower end of the gear case 60c may be lower than that of the uppermost part of the starter motor 26. Specifically, the clutch actuator 260 can be placed effectively using the space around the starter motor 26. A component other than the starter motor 26 may be located anterior to the gear case 60c.

As shown in Fig. 11, the gear case 60c may extend from the rear part of the electric motor 60a toward the center Cw in the vehicle width direction. The first arm 61 of the link mechanism Li may extend downward from the output shaft 60b of the clutch actuator 260. Thereby, the position of the connecting rod 63 can be closer to the upper surface of the case 225, and the space for providing other components and devices above the case 225 can be easily secured.

The clutch actuator 260 may be located posterior to the cylinder part 223 and the cylinder head 224. Specifically, as shown in Fig. 11, the clutch actuator 260 may be located closer to the center Cw in the vehicle width direction than the side surface of the cylinder part 223 and the side surface 224a of the cylinder head 224 in the plan view. Further, as shown in Fig. 10, the clutch actuator 260 may be located posterior to the cylinder part 223 in the side view. According to the layout of the clutch actuator 260, adhesion of dirt or rainwater to the clutch actuator 260 can be suppressed at traveling of the vehicle. Such a layout is effective for a vehicle to run rough dirt roads frequently. The clutch actuator 260 may be located posterior to the duct parts 251 a, more specifically, posterior to the two left duct parts 251a in the plan view.

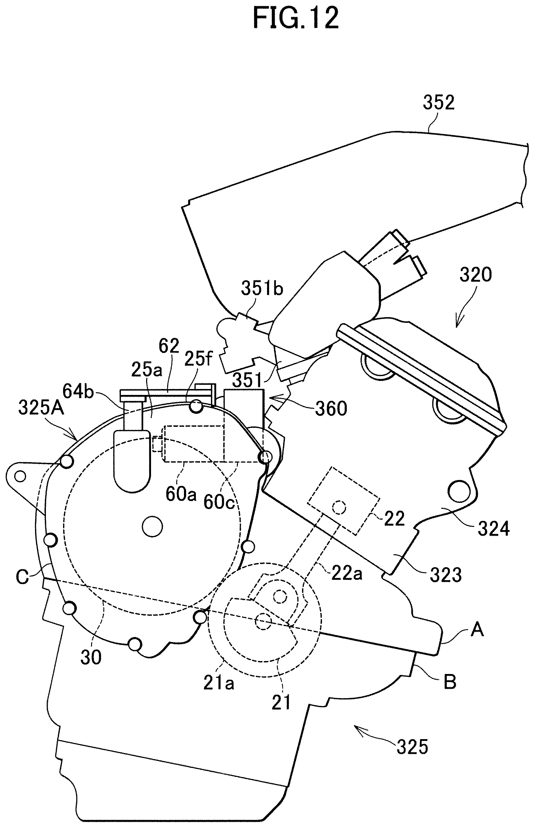

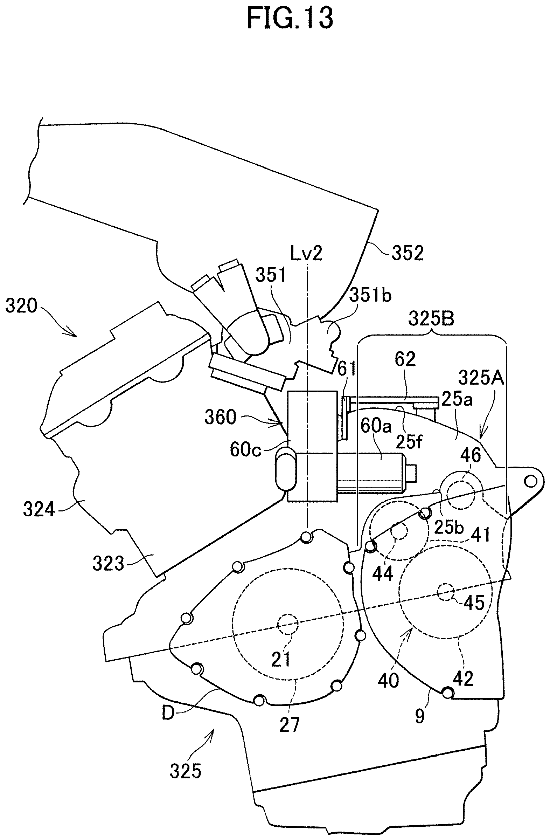

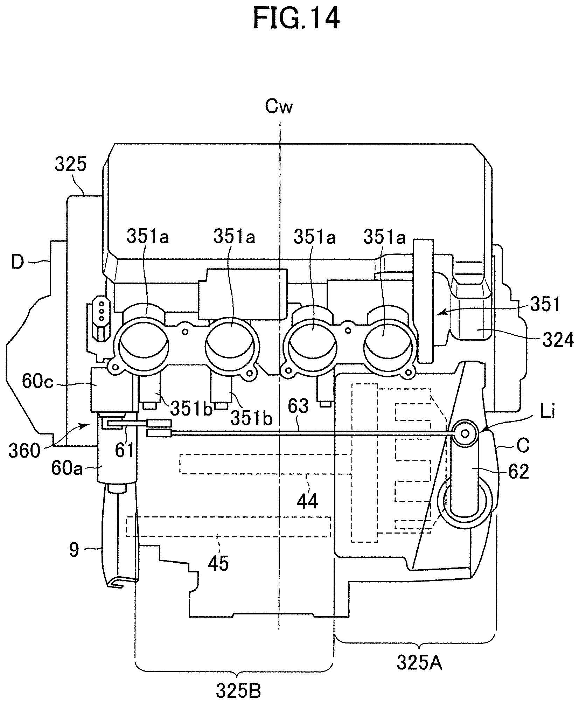

Figs. 12 to 14 show yet another example of the layout of the clutch actuator. Fig. 12 is a right side view, Fig. 13 is a left side view, and Fig. 14 is a plan view. Here, the differences from the example explained with reference to Figs. 2 to 6B are centered for explanation. The items without explanation are the same as the example explained with reference to Figs. 2 to 6B.

In Figs. 12 to 14, a clutch actuator 360, an engine unit 320, a throttle body 351, and an air cleaner 352 are shown in place of the above described clutch actuator 60, engine unit 20, throttle body 51, and air cleaner 52. The engine unit 320 has a cylinder part 323, a cylinder head 324, and a case 325. In the example explained here, like the example explained with reference to Figs. 9 to 11, the air cleaner 352 is located above the cylinder head 324. The cylinder part 323 in the example explained here has four cylinders. Accordingly, the throttle body 351 has four duct parts 351 a respectively connected to the four cylinders as shown in Fig. 14. The number of the cylinders and the number of duct parts 351 a are not limited to three. More cylinders and more duct parts 351 a may be provided to the engine. Less cylinders and less duct parts 351 a may be provided to the engine.

The case 325 includes a clutch housing part 325A like the above described case 25. As shown in Fig. 12, the clutch actuator 360 is arranged such that a part thereof overlaps with the upper portion 25a of the clutch housing part 325A in the side view. In the example explained here, the whole electric motor 60a and the lower part of the gear case 60c may overlap with the upper portion 25a of the clutch housing part 325A. Further, the clutch actuator 360 is located above the case 325. Specifically, as shown in Figs. 13 and 14, the front part of the clutch actuator 360 (the gear case 60c in the example explained here) may be located above a part housing the crank shaft 21 and the alternator 27 in the case 325.

In the clutch actuator 360, like the above described clutch actuator 60, the electric motor 60a is located posterior to the gear case 60c. The electric motor 60a is arranged such that the direction of the axis line thereof is along the front-back direction in the plan view like the example explained with reference to Figs. 2 to 6B. In the example shown in Figs. 12 and 14, the axis line of the electric motor 60a may be substantially horizontal in the side view of the vehicle body.

As shown in Fig. 13, the throttle body 351 may be shifted forward from the vertical line Lv2 passing through the rear end of the cylinder part 323. On the other hand, the clutch actuator 360 may be shifted rearward from the vertical line Lv2. In the example shown here, the front part of the clutch actuator 360 may overlap with the vertical line Lv2.

The gear case 60c may extend upward from the front part of the electric motor 60a. Thereby, the position of the electric motor 60a can be lower and closer to the upper surface of the case 325. According to the layout, the position of the center of gravity of the clutch actuator 360 can be lower and the support structure therefor can be easily provided. In the example explained here, the electric motor 60a may be located above the transmission housing part 325B in the side view.

As shown in Fig. 13, the gear case 60c may be located below the throttle body 351 (more specifically, an injector 351 b attached to the throttle body 351). The output shaft 60b of the clutch actuator 360 may be located in the upper part of the gear case 60c. The first arm 61 of the link mechanism Li may obliquely extend upward and toward the center in the vehicle width direction from the output shaft 60b.

The clutch actuator 360 may be located posterior to the duct part located leftmost of the four duct parts 351 a (the duct part located at the outermost side in the vehicle width direction) in the plan view. The front part of the clutch actuator 360 (the foremost part of the gear case 60c) may overlap with the duct part 351 a located leftmost in the plan view.

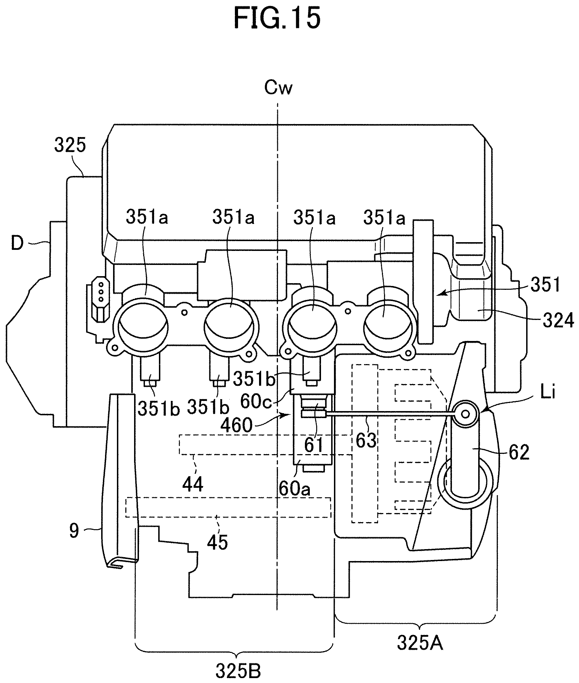

Fig. 15 is a plan view showing a modified example of the layout shown in Figs. 12 to 14. In Fig. 15, the same parts as the parts explained with reference to Figs. 12 to 14 have the same signs. Here, the differences from the example explained with reference to Figs. 12 to 14 will be explained mainly. The items without explanation are the same as the example explained with reference to Figs. 12 to 14.

In Fig. 15, a clutch actuator 460 is shown in place of the above described clutch actuator 360. The clutch actuators 60, 160, 260, 360 are located at the opposite sides to the clutch housing parts 25A, 225A, 325A across the centers Cw in the vehicle width direction. The clutch actuator 460 shown in Fig. 15 is located at the same side with the clutch housing part 325A with respect to the center Cw in the vehicle width direction. Specifically, the clutch actuator 460 and the clutch housing part 325A are located rightward from the center Cw in the vehicle width direction. Note that the clutch actuator 460 is also arranged such that a part thereof may overlap with the clutch housing part 325A in the side view.

In the examples explained above, the engine unit includes one clutch 30 which is arranged in one direction (specifically, rightward) from the transmission 40. However, the present teaching may be applied to a motorcycle including an engine unit having two clutches respectively provided on the both sides of the transmission, that is, on the right and the left. That is, the present teaching may be applied to a motorcycle having a double-clutch transmission (DCT). In this case, the case housing the clutches and the transmission includes clutch housing parts in the right part and the left part thereof, and includes a transmission housing part between them. The motorcycle may include two clutch actuators respectively connected to the two clutches via the link mechanism Li. The two clutch actuators may be located between the two clutch housing parts, for example. Or, the two clutch actuators may be located outward in the vehicle width direction of the two clutch housing parts. That is, the clutch actuator for operating the left clutch may be located on the left of the left clutch housing part and the clutch actuator for operating the right clutch may be located on the right of the right clutch housing part.

Furthermore, in the examples explained above, one clutch 30 is provided in one direction (specifically, rightward) in the vehicle width direction from the transmission 40. However, the present teaching may be applied to a motorcycle having a double clutch transmission (DCT) in which two clutches 30 are located in one direction from the transmission 40.

The example explained above is a motor cycle having the engine unit in which two cylinders, three cylinders, or four cylinders are arranged in parallel. However, the present teaching may be applied to a motorcycle having a single-cylinder engine. That is, the present teaching may be applied to a motorcycle having an engine unit in which only one cylinder is formed in a cylinder part.

The example explained above is a motor cycle having the engine unit in which two cylinders, three cylinders, or four cylinders are arranged in parallel. However, the present teaching may be applied to a motorcycle having a V-engine. That is, the present teaching may be applied to a motorcycle having an engine unit including a cylinder part inclined forward and a cylinder part inclined rearward. In this case, the clutch actuator may be located posterior to the cylinder part inclined rearward in the side view of the vehicle body. Further, in the case where the clutch is located on the right side of the transmission in the V-engine, the clutch actuator may be provided leftward apart from the clutch housing part.

It is not necessarily that the clutch actuator 60 includes a gear that transmits the power of the electric motor 60a to the output shaft 60b (i.e., a gear housed in the gear case 60c). That is, the rotation shaft of the electric motor 60a can function as the output shaft 60b.

As explained above, the clutch actuators 60, 160, 260, 360, 460 are located in a direction toward the center in the vehicle width direction from the clutch housing parts 25A, 225A, 325A, and spaced away from the clutch housing parts 25A, 225A, 325A. Further, the clutch actuators 60, 160, 260, 360, 460 partially overlap with the upper portions 25a of the clutch housing parts 25A, 225A, 325A in the side view. Furthermore, the clutch actuators 60, 160, 260, 360, 460 are connected to the clutches 30 via the link mechanisms Li. According to the structures, the engine units 20, 220, 320 and the clutch actuators 60, 160, 260, 360, 460 can be compactly laid out and interference between the other components and devices provided above the cases 25, 225, 325 and the clutch actuator 60 can be easily avoided while upsizing of the vehicle body is suppressed. Note that, the clutch 30 may be located on the left side of the engine unit. In this cases, the clutch actuators 60, 160, 260, 360, 460 are located rightward from the center of the engine unit in the vehicle width direction.

## Claims

1. A straddle-type vehicle comprising:
an engine unit (20,220,320) including
a cylinder part (23,223,323) disposed in a front part of the engine unit (20,220,320),
a transmission (40) disposed in a rear part of the engine unit (20,220,320),
a clutch (30) disposed from the transmission (40) in a first direction defined as an outward direction in a vehicle width direction, and
a case (25,225,325) including a transmission housing part (25B,225B,325B) housing the transmission (40) and a clutch housing part (25A,225A,325A) housing the clutch (30);
a clutch actuator (60,260,360,460) for operating the clutch (30); and
a link mechanism (Li) connecting the clutch actuator (60,260,360,460) and the clutch (30) via the first part (64), **characterized in that**
the clutch housing part (25A,225A,325A) has an upper portion (25a) located higher than the transmission housing part (25B,225B,325B);
the clutch actuator (60,260,360,460) for operating the clutch (30) is located above the case (25,225,325) in a side view of a vehicle body, the clutch actuator (60,260,360,460) being disposed apart from the upper portion (25a) of the clutch housing part (25A,225A,325A) in a second direction defined as an opposite direction to the first direction, the clutch actuator (60,260,360,460) having at least a part overlapping with the upper portion (25a) of the clutch housing part (25A,225A,325A) in the side view of the vehicle body; and
the link mechanism (Li) including a first part (64) located from the clutch (30) in the first direction and a second part (61,62) located above the case (25,225,325) and connecting the clutch actuator (60,260,360,460) and the clutch (30) via the first part (64) and the second part (61,62).

2. A straddle-type vehicle according to claim 1, **characterized in that** the first part includes an operation shaft (64) for operating the clutch (30), the operation shaft (64) having a projecting part (64b) projecting upward from the clutch housing part (25A,225A,325A), and the second part (61,62) connects the projecting part (64b) of the operation shaft (64) and the clutch actuator (60,260,360,460).

3. A straddle-type vehicle according to claim 2, **characterized in that** the second part (61,62) includes a connecting member extending in the vehicle width direction, and the connecting member is located anterior or posterior to an upper end of the clutch housing part (25A,225A,325A) in the side view of the vehicle.

4. A straddle-type vehicle according to claim 2 or 3, **characterized in that** the projecting part (64b) of the operation shaft (64) is located anterior or posterior to an upper end of the clutch housing part (25A,225A,325A) in the side view of the vehicle.

5. A straddle-type vehicle according to claim 2, **characterized in that** the second part of the link mechanism (Li) includes a first arm (61) connected to an output shaft (60b) of the clutch actuator (60,260,360,460), a second arm (62) connected to the projecting part (64b) of the operation shaft (64), and a connecting member (63) extending in the vehicle width direction and having an end in the first direction connected to the second arm (62) and an end in the second direction connected to the first arm (61).

6. A straddle-type vehicle according to claim 5, **characterized in that** the first arm (61) and the second arm (62) respectively extend from the connecting member (63) in two directions orthogonal to each other in the side view of the vehicle body.

7. A straddle-type vehicle according to claim 5, **characterized in that** the connecting member (63) is located posterior to the cylinder part (23,223,323), and
the second arm (62) extends forward from the projecting part (64b) of the operation shaft (64) in a plan view of the vehicle body and is connected to the connecting member (63).

8. A straddle-type vehicle according to any one of claims 1 to 7, **characterized in that** the clutch actuator (60,260,360,460) includes a motor (60a), and
the motor (60a) is arranged so that an axis line of a rotation shaft thereof may be directed in a front-back direction in a plan view of the vehicle body.

9. A straddle-type vehicle according to any one of claims 1 to 8, **characterized in that** the clutch actuator (60,260,360,460) is located at an opposite side to the clutch housing part (25A,225A,325A) across a center (Cw) in the vehicle width direction.

10. A straddle-type vehicle according to any one of claims 1 to 8, **characterized in that** the clutch actuator (60,260,360,460) is located in the first direction from a center (Cw) in the vehicle width direction.

11. A straddle-type vehicle according to any one of claims 1 to 10, **characterized in that** an intake member is disposed posterior to a cylinder head (24,224,324) provided in an upper part of the cylinder part (23,223,323),
at least a part of the clutch actuator (60,260,360,460) is located in the second direction of the intake member in a plan view, and
the link mechanism (Li) is provided below the intake member.

12. A straddle-type vehicle according any one of claims 1 to 11, **characterized in that** a throttle body (51,251,351) is connected to a cylinder head (24,224,324) provided in an upper part of the cylinder part (23,223,323),
at least a part of the throttle body (51,251,351) is provided forward with respect to a vertical line (Lv2) passing through a rear end of the cylinder part (23,223,323), and
the clutch actuator (60,260,360,460) is provided posterior to a front end of the throttle body (51,251,351) and at least a part of the clutch actuator (60,260,360,460) is provided rearward from the vertical line (Lv2).

13. A straddle-type vehicle according any one of claims 1 to 11, **characterized in that** a throttle body (51,251,351) is connected to a cylinder head (24,224,324) provided in an upper part of the cylinder part (23,223,323),
the throttle body (51,251,351) is shifted in one direction of a forward direction and a rearward direction with respect to a vertical line (Lv2) passing through a rear end of the cylinder part (23,223,323), and
the clutch actuator (60,260,360,460) is shifted in the other direction of the forward direction and the rearward direction with respect to the vertical line (Lv2).

14. A straddle-type vehicle according any one of claims 1 to 7, **characterized in that** the operation shaft (64) inclines in a front-back direction from a vertical line passing through the rotation center of the clutch (30).

15. A straddle-type vehicle according any one of claims 1 to 14, **characterized in that** at least a part of the clutch actuator (60,260,360,460) is located outward from a side surface of the case (25,225,325) in the vehicle width direction.

## Patentansprüche

1. Ein Spreiz-Sitz-Typ-Fahrzeug das umfasst:
eine Motor-Einheit (20, 220, 320), die beinhaltet
einen Zylinderteil (23, 223, 323), positioniert in einem vorderen Teil der Motor-Einheit (20, 220, 320),
ein Getriebe (40), positioniert in einem hinteren Teil der Motor-Einheit (20, 220, 320),
eine Kupplung (30), positioniert von dem Getriebe (40) in eine erste Richtung,
definiert als eine Außen-Richtung in einer Fahrzeug-Breiten-Richtung, und
einen Kasten (25, 225, 325), der einen Getriebe-Gehäuseteil (25B, 225B, 325B),
welcher das Getriebe (40) aufnimmt, und einen Kupplungs-Gehäuseteil (25A, 225A, 325A), der die Kupplung (30) aufnimmt, beinhaltet;
einen Kupplungs-Aktuator (60, 260, 460), zum Betreiben der Kupplung (30); und
einen Gelenk-Mechanismus (Li), der den Kupplungs-Aktuator (60, 260, 360, 460) und
die Kupplung (30) über den ersten Teil (64) verbinden, **dadurch gekennzeichnet,**
**dass** der Kupplungs-Gehäuseteil (25A, 225A, 325A) einen oberen Abschnitt (25a) hat, der höher als der Getriebe-Gehäuseteil (25B, 225B, 325B) angeordnet ist;
der Kupplungs-Aktuator (60, 260, 360, 460), zum Betreiben der Kupplung (30), ist oberhalb des Kastens (25, 225, 325) in einer Seiten-Ansicht eines Fahrzeug-Körpers angeordnet, der Kupplungs-Aktuator (60, 260, 360, 460) ist beabstandet von dem oberen Abschnitt (25a) des Kupplungs-Gehäuseteils (25A, 225A, 325A), in einer zweiten Richtung, definiert als eine Gegen-Richtung, zu der ersten Richtung, positioniert, der Kupplungs-Aktuator (60, 260, 360, 460) hat zumindest einen Teil, der mit dem oberen Abschnitt (25A) des Kupplungs-Gehäuseteils (25A, 225A, 325A) in der Seiten-Ansicht des Fahrzeug-Körpers überlappt; und
der Gelenk-Mechanismus (Li) beinhaltet einen ersten Teil (64) angeordnet von der Kupplung (30) in der ersten Richtung und einen zweiten Teil (61, 62) angeordnet oberhalb des Kastens (25, 225, 325) und verbindet den Kupplungs-Aktuator (60, 260, 360, 460) und die Kupplung (30) über den ersten Teil (64) und den zweiten Teil (61, 62).

2. Ein Spreiz-Sitz-Typ-Fahrzeug gemäß Anspruch 1, **dadurch gekennzeichnet, dass** der erste Teil eine Betätigungswelle (64), zum Betätigen der Kuppel (30), beinhaltet, die Betätigungswelle (64) hat einen vorspringenden Teil (64b), der nach oben von dem Kupplungs-Gehäuseteil (25A, 225A, 325A) vorspringt, und der zweite Teil (61, 62) verbindet den vorspringenden Teil (64B) der Betätigungswelle (64) und den Kupplungs-Aktuator (60, 260, 360, 460).

3. Ein Spreiz-Sitz-Typ-Fahrzeug gemäß Anspruch 2, **dadurch gekennzeichnet, dass** der zweite Teil (61, 62) ein Verbindungselement beinhaltet, das sich in die Fahrzeug-Breiten-Richtung erstreckt, und das Verbindungselement ist vorhergehend oder nachhergehend zu einem oberen Ende des Kupplungs-Gehäuseteils (25A, 225A, 325A) in der Seiten-Ansicht des Fahrzeugs angeordnet.

4. Ein Spreiz-Sitz-Typ-Fahrzeug gemäß Anspruch 2 oder 3, **dadurch gekennzeichnet, dass** der vorspringende Teil (64b) der Betätigungswelle (64) vorhergehend oder nachgehend zu einem oberen Ende des Kupplungs-Gehäuseteils (25A, 225A, 325A), in der Seiten-Ansicht des Fahrzeugs, angeordnet ist.

5. Ein Spreiz-Sitz-Typ-Fahrzeug gemäß Anspruch 2, **dadurch gekennzeichnet, dass** der zweite Teil des Gelenk-Mechanismus (Li) einen ersten Arm (61), verbunden mit einer Ausgangswelle (60b) des Kupplungs-Aktuators (60, 260, 360, 460), einen zweiten Arm (62), verbunden zu dem vorspringenden Teil (64b) der Betätigungswelle (64), und ein Verbindungselement (63), das sich in die Fahrzeug-Breiten-Richtung erstreckt, und ein Ende hat, in der ersten Richtung, verbunden mit dem zweiten Arm (62), und ein Ende hat, in der zweiten Richtung, verbunden mit dem ersten Arm (61), beinhaltet.

6. Ein Spreiz-Sitz-Typ-Fahrzeug gemäß Anspruch 5, **dadurch gekennzeichnet, dass** der erste Arm (61) und der zweite Arm (62) sich jeweils von dem Verbindungselement (63) in zwei Richtungen, orthogonal zueinander in der Seiten-Ansicht des Fahrzeug-Körpers. erstrecken.

7. Ein Spreiz-Sitz-Typ-Fahrzeug gemäß Anspruch 5, **dadurch gekennzeichnet, dass** das Verbindungselement (63) nachgehend zu dem Zylinderteil (23, 223, 323) angeordnet ist, und
der zweite Arm (62) sich nach vorne von dem vorspringenden Teil (64B) der Betätigungswelle (64), in einer Draufsicht des Fahrzeug-Körpers, erstreckt, und mit dem Verbindungselement (63) verbunden ist.

8. Ein Spreiz-Sitz-Typ-Fahrzeug gemäß irgendeinem der Ansprüche 1 bis 7, **dadurch gekennzeichnet, dass** der Kupplungs-Aktuator (60, 260, 360, 460) einen Motor (60A) beinhaltet, und der Motor (60A) ist angeordnet, so dass eine Axiallinie einer Drehwelle desselben in eine Vorder-Rück-Richtung in einer Draufsicht des Fahrzeug-Körpers gerichtet sein kann.

9. Ein Spreiz-Sitz-Typ-Fahrzeug gemäß irgendeinem der Ansprüche 1 bis 8, **dadurch gekennzeichnet dass** der Kupplungs-Aktuator (60, 260, 360, 460) an einer gegenüberliegenden Seite zu dem Kupplungs-Gehäuseteil (25A, 225A, 325A), quer zu einer Mitte (Cw) in der Fahrzeug-Breiten-Richtung, angeordnet ist.

10. Ein Spreiz-Sitz-Typ-Fahrzeug gemäß irgendeinem der Ansprüche 1 bis 8, **dadurch gekennzeichnet, dass** der Kupplungs-Aktuator (60, 260, 360, 460) in der ersten Richtung von einer Mitte (Cw) in die Fahrzeug-Breiten-Richtung angeordnet ist.

11. Ein Spreiz-Sitz-Typ-Fahrzeug gemäß irgendeinem der Ansprüche 1 bis 10, **dadurch gekennzeichnet, dass** ein Einlasselement nachfolgend zu einen Zylinderkopf (24, 224, 324), vorgesehen in einem oberen Teil des Zylinderteils (23, 223, 323), positioniert ist,
zumindest ein Teil des Kupplungs-Aktuators (60, 260, 360, 460) ist in der zweiten Richtung des Einlasselements in einer Draufsicht angeordnet, und
der Gelenk-Mechanismus (Li) ist unterhalb des Einlasselements vorgesehen.

12. Ein Spreiz-Sitz-Typ-Fahrzeug gemäß irgendeinem der Ansprüche 1 bis 11, **dadurch gekennzeichnet, dass** ein Drosselkörper (51, 251, 351) mit einem Zylinderkopf (24, 224, 324), vorgesehen in einem oberen Teil des Zylinderteils (23, 223, 323), verbunden ist,
zumindest ein Teil des Drosselkörpers (51, 251, 351) ist vorne mit Bezug auf eine vertikale Linie (Lv2) vorgesehen, welche durch ein hinters Ende des Zylinderteils (23, 223, 323) hindurchtritt, und
der Kupplungs-Aktuator (60, 260, 360, 460) ist nachfolgend zu einem vorderen Ende des Drosselkörpers (51, 251, 351) vorgesehen und zumindest ein Teil des Kupplungs-Aktuators (60, 260, 360, 460) ist rückwärtig von der vertikalen Linie (Lv2) vorgesehen.

13. Ein Spreiz-Sitz-Typ-Fahrzeug gemäß irgendeinem der Ansprüche 1 bis 11, **dadurch gekennzeichnet, dass** ein Drosselkörper (51, 251, 351) mit einem Zylinderkopf (24, 224, 324), der in einem oberen Teil des Zylinderteils (23, 223, 323) vorgesehen ist, verbunden,
der Drosselkörper (51, 251, 351) ist in eine Richtung von einer vorwärtsgerichteten Richtung und einer rückwärtsgerichteten Richtung mit Bezug auf eine vertikale Linie (Lv2), welche durch ein hinteres Ende des Zylinderteils (23, 223, 323) hindurchtritt, versetzt, und
der Kupplungs-Aktuator (60, 260, 360, 460) ist in die andere Richtung der vorwärtsgerichteten Richtung und der rückwärtsgerichteten Richtung mit Bezug auf die vertikale Linie (Lv2) versetzt.

14. Ein Spreiz-Sitz-Typ-Fahrzeug gemäß irgendeinem der Ansprüche 1 bis 7, **dadurch gekennzeichnet, dass** die Betätigungswelle (64) in eine Vorder-Rück-Richtung von einer vertikalen Linie, welche durch das Drehzentrum der Kupplung (30) hindurchtritt, geneigt.

15. Ein Spreiz-Sitz-Typ-Fahrzeug gemäß irgendeinem der Ansprüche 1 bis 14, **dadurch gekennzeichnet, dass** zumindest ein Teil des Kupplungs-Aktuators (60, 260, 360, 460) außerhalb von einer Seitenfläche des Kastens (25, 225, 325) in der Fahrzeug-Breiten-Richtung angeordnet ist.

## Revendications

1. Véhicule de type à enfourcher comprenant :
une unité de motorisation (20, 220, 320) incluant
un organe formant cylindre (23, 223, 323) disposé dans la partie avant de l'unité de motorisation (20, 220, 320),
une transmission (40) disposée dans la partie arrière de l'unité de motorisation (20, 220, 320),
un embrayage (30) disposé à partir de la transmission (40) dans une première direction définie comme une direction vers l'extérieur dans le sens de la largeur du véhicule, et
une enveloppe (25, 225, 325) incluant une partie formant carter de transmission (25B, 225B, 325B) logeant la transmission (40) et une partie formant carter d'embrayage (25A, 225A, 325A) logeant l'embrayage (30),
un actionneur d'embrayage (60, 260, 360, 460) destiné à manoeuvrer l'embrayage (30), et
un mécanisme de liaison (Li) reliant l'actionneur d'embrayage (60, 260, 360, 460) et l'embrayage (30) par l'intermédiaire d'un premier organe (64), **caractérisé en ce que**
la partie formant carter d'embrayage (25A, 225A, 325A) comporte une partie supérieure (25a) située plus haut que la partie formant carter de transmission (25B, 225B, 325B),
l'actionneurd'embrayage (60, 260, 360, 460) destiné à manoeuvrer l'embrayage (30) est situé au-dessus de l'enveloppe (25, 225, 325) dans une vue latérale du châssis du véhicule, l'actionneurd'embrayage (60, 260, 360, 460) étant disposé à distance de la partie supérieure (25a) de la partie formant carter d'embrayage (25A, 225A, 325A) dans une seconde direction définie comme la direction opposée à la première direction, l'actionneur d'embrayage (60, 260, 360, 460) comportant au moins un organe se chevauchant avec la partie supérieure (25a) de la partie formant carter d'embrayage (25A, 225A, 325A) dans la vue latérale du châssis du véhicule, et
le mécanisme de liaison (Li) incluant un premier organe (64) situé en partant de l'embrayage (30) dans la première direction, ainsi qu'un second organe (61, 62) situé au-dessus de l'enveloppe (25, 225, 325) et reliant l'actionneur d'embrayage (60, 260, 360, 460) et l'embrayage (30) par l'intermédiaire du premier organe (64) et du second organe (61, 62).

2. Véhicule de type à enfourcher selon la revendication 1, **caractérisé en ce que** le premier organe inclut un arbre de manoeuvre (64) destiné à manoeuvrer l'embrayage (30), l'arbre de manoeuvre (64) comportant un organe saillant (64b) dépassant vers le haut depuis la partie formant carter d'embrayage (25A, 225A, 325A), et le second organe (61, 62) relie l'organe saillant (64b) de l'arbre de manoeuvre (64) et l'actionneur d'embrayage (60, 260, 360, 460).

3. Véhicule de type à enfourcher selon la revendication 2, **caractérisé en ce que** le second organe (61, 62) inclut un élément de raccordement se déployant dans le sens de la largeur du véhicule, et l'élément de raccordement est situé sur le côté antérieur ou postérieur de l'extrémité supérieure de la partie formant carter d'embrayage (25A, 225A, 325A) dans la vue latérale du véhicule.

4. Véhicule de type à enfourcher selon la revendication 2 ou la revendication 3, **caractérisé en ce que** l'organe saillant (64b) de l'arbre de manoeuvre (64) est situé sur le côté antérieur ou postérieur de l'extrémité supérieure de la partie formant carter d'embrayage (25A, 225A, 325A) dans la vue latérale du véhicule.

5. Véhicule de type à enfourcher selon la revendication 2, **caractérisé en ce que** le second organe du mécanisme de liaison (Li) inclut un premier bras (61) raccordé à un arbre de sortie (60b) de l'actionneur d'embrayage (60, 260, 360, 460), un second bras (62) raccordé à l'organe saillant (64b) de l'arbre de manoeuvre (64) et un élément de raccordement (63) se déployant dans le sens de la largeur du véhicule et possédant une extrémité dans la première direction reliée au second bras (62), ainsi qu'une extrémité dans la seconde direction reliée au premier bras (61).

6. Véhicule de type à enfourcher selon la revendication 5, **caractérisé en ce que** le premier bras (61) et le second bras (62) s'étendent respectivement depuis l'élément de raccordement (63) dans deux directions orthogonales l'une à l'autre dans une vue latérale du châssis du véhicule.

7. Véhicule de type à enfourcher selon la revendication 5, **caractérisé en ce que** l'élément de raccordement (63) est situé à l'arrière de l'organe formant cylindre (23, 223, 323), et
le second bras (62) s'étend vers l'avant depuis l'organe saillant (64b) de l'arbre de manoeuvre (64) dans une vue en plan du châssis du véhicule, et il est relié à l'élément de raccordement (63).

8. Véhicule de type à enfourcher selon l'une quelconque des revendications 1 à 7, **caractérisé en ce que** l'actionneur d'embrayage (60, 260, 360, 460) inclut un moteur électrique (60a), et
le moteur électrique (60a) est agencé de telle sorte que l'axe de son arbre de rotation peut être dirigé dans une direction avant - arrière dans une vue en plan du châssis du véhicule.

9. Véhicule de type à enfourcher selon l'une quelconque des revendications 1 à 8, **caractérisé en ce que** l'actionneur d'embrayage (60, 260, 360, 460) est situé du côté opposé à la partie formant carter d'embrayage (25A, 225A, 325A) de l'autre côté du centre (Cw) dans le sens de la largeur du véhicule.

10. Véhicule de type à enfourcher selon l'une quelconque des revendications 1 à 8, **caractérisé en ce que** l'actionneur d'embrayage (60, 260, 360, 460) est situé dans la première direction à partir du centre (Cw) dans le sens de la largeur du véhicule

11. Véhicule de type à enfourcher selon l'une quelconque des revendications 1 à 10, **caractérisé en ce qu'un** élément d'admission est disposé à l'arrière de la culasse (24, 224, 324) placée dans la partie supérieure de l'organe formant cylindre (23, 223, 323),
au moins une partie de l'actionneur d'embrayage (60, 260, 360, 460) est située dans la seconde direction de l'élément d'admission dans une vue en plan, et
le mécanisme de liaison (Li) est prévu en dessous de de l'élément d'admission.

12. Véhicule de type à enfourcher selon l'une quelconque des revendications 1 à 11, **caractérisé en ce que** le corps de papillon des gaz (51, 251, 351) est raccordé à la culasse (24, 224, 324) placée à la partie supérieure à de l'organe formant cylindre (23, 223, 323),
au moins une partie du corps de papillon (51, 251, 351) est prévue à l'avant d'une ligne verticale (Lv2) traversant l'extrémité arrière de l'organe formant cylindre (23, 223, 323), et
l'actionneur d'embrayage (60, 260, 360, 460) est prévu à l'arrière de l'extrémité avant du corps de papillon (51, 251, 351) et au moins une partie de l'actionneur d'embrayage (60, 260, 360, 460) est prévue à l'arrière à partir de la ligne verticale (Lv2).

13. Véhicule de type à enfourcher selon l'une quelconque des revendications 1 à 11, **caractérisé en ce que** le corps de papillon (51, 251, 351) est raccordé à la culasse (24, 224, 324) placée à la partie supérieure à de l'organe formant cylindre (23, 223, 323),
le corps de papillon (51, 251, 351) est décalé dans une direction parmi la direction vers l'avant et la direction vers l'arrière par rapport à la ligne verticale (Lv2) traversant l'extrémité arrière de l'organe formant cylindre (23, 223, 323), et
l'actionneur d'embrayage (60, 260, 360, 460) est décalé dans l'autre direction parmi la direction avant et la direction arrière par rapport à la ligne verticale (Lv2).

14. Véhicule de type à enfourcher selon l'une quelconque des revendications 1 à 7, **caractérisé en ce que** l'arbre de manoeuvre (64) est incliné dans la direction avant - arrière depuis une ligne verticale traversant le centre de rotation de l'embrayage (30).

15. Véhicule de type à enfourcher selon l'une quelconque des revendications 1 à 14, **caractérisé en ce qu'au** moins une partie de l'actionneur d'embrayage (60, 260, 360, 460) est située vers l'extérieur depuis une surface latérale de l'enveloppe (25, 225, 325) dans le sens de la largeur du véhicule.
